# EUROPEAN PATENT APPLICATION

(11) **EP 2 071 221 A1**
(43) Date of publication of application: **17.06.2009**
(21) Application number: 07828846.1
(22) Date of filing: 28.09.2007
(51) Int. Cl.: F16L 13/00, F16L 19/04, F16L 19/08

(54) **PIPE JOINT, REFRIGERATION DEVICE, AND HEAT PUMP-TYPE HOT WATER DEVICE**

(30) Priority: 28.09.2006 JP 2006265193; 11.09.2007 JP 2007235992
(71) Applicant: Daikin Industries, Ltd., Osaka 530-8323 (JP)
(72) Inventor: NAKATA, Haruo, Sakai-shi, Osaka 591-8511 (JP); SHIMAMURA, Takashi, Sakai-shi, Osaka 591-8511 (JP); KOIZUMI, Jun, Sakai-shi, Osaka 591-8511 (JP)
(74) Representative: HOFFMANN EITLE
(86) International application number: PCT/JP2007/069105
(87) International publication number: WO 2008/041659

(57) **Abstract**

A pipe joint includes a joint body 1 into which a pipe 4 is to be inserted and a coupling member 2 which is arranged around the pipe 4 to be inserted into the joint body 1. The joint body 1 and the coupling member 2 include screw portions 14a, 21a, respectively. The coupling member 2 is fastened to the joint body 1 by mutually screwing the screw portions 14a, 21a. The coupling member 2 includes a holding portion 22. A pair of or a plurality of pairs of holding surfaces which are opposite to each other are formed on the outer circumferential surface of the holding portion 22 so that the holding portion 22 can be held by a fastening tool. A part of the coupling member 2 including at least the holding surfaces is disconnectable from the remaining part of the coupling member 2.

## Description

### TECHNICAL FIELD

The present invention relates to a pipe joint. Further, the present invention relates to a refrigeration apparatus and a heat pump water heating apparatus which use the pipe joint at a refrigerant circuit thereof.

### BACKGROUND ART

In general, a pipe joint which is used for a refrigerant circuit of a refrigeration apparatus and a heat pump water heating apparatus includes a joint body and a coupling member arranged around a pipe which is inserted into the joint body. For example, a flared pipe joint which is disclosed in Patent Document 1 and a bite type pipe joint which is disclosed in Patent Document 1 and Patent Document 2 are known as such a pipe joint. To connect a pipe to one of these pipe joints, the joint body and the coupling member are mutually screwed with a tool until rotation torque reaches a predetermined value. Therefore, after a pipe is connected to the pipe joint, anybody can easily loosen a screwed part of the pipe joint and further remove the pipe thereafter by using a general fastening tool such as a spanner or a wrench.

These days, the handling of chlorofluorocarbon gas which is in heavy usage as refrigerants of refrigeration apparatuses is becoming stricter year by year. This is because chlorofluorocarbon gas is a factor of generating problems of ozone layer destruction, global warming and the like when discharged into the atmosphere. Accordingly, it is desired that no one can easily loosen a screwed part of a pipe joint and further remove a connected pipe thereafter.
Patent Document 1: Japanese Laid-Open Patent Publication No. 2003-74769
Patent Document 2: Japanese National Phase Laid-Open Patent Publication No. 2004-526911

### DISCLOSURE OF THE INVENTION

An objective of the present invention is to provide a pipe joint which prevents anyone from easily loosening a screwed part thereof and further removing a connected pipe thereafter by using a general fastening tool. The present invention also provides a refrigeration apparatus and a heat pump water heating apparatus which use the pipe joint at a refrigerant circuit thereof.

In order to achieve the above-mentioned objective, and in accordance with one aspect of the present invention, a pipe joint is provided that includes a joint body which is attached to an interconnecting device and into which a pipe is to be inserted, and a coupling member which is arranged around the pipe that is inserted into the joint body. The joint body and the coupling member each include a screw portion, and the coupling member is fastened to the joint body by mutually screwing the screw portions. The coupling member includes a holding portion. A pair of or a plurality of pairs of holding surfaces which are opposite to each other are formed on the outer circumferential surface of the holding portion so that the holding portion can be held with a fastening tool. A first part which is a part of the coupling member including at least the holding surfaces is configured to be disconnectable from a second part which is the remaining part of the coupling member.

Here, the disconnection includes a case in which, when rotation torque in the fastening direction reaches or exceeds a predetermined value, the first part cannot transmit to the second part of the coupling member the rotation torque at all or only a part of the rotation torque which part is greater than or equal to the predetermined value. Further, the disconnection includes a case in which rotation torque only in the loosening direction cannot be transmitted. For example, the first part and the second part may be separately formed and it may be configured such that, when rotation torque in the fastening direction is applied, the first part is engaged with the second part and the torque transmission from the first part to the second part is allowed, and, when rotation torque in the loosening direction is applied, the engagement between the first part and the second part is cancelled and the torque transmission from the first part to the second part is interrupted.

According to the present invention, the part including the holding surfaces of the holding part is disconnected in the pipe connecting process. Therefore, once the pipe is connected to the bite type pipe joint, it is impossible to use a general fastening tool. Accordingly, no one can easily loosen the screwed part of the pipe joint and remove the pipe after loosening the screwed part. Consequently, improper leakage and discharge of refrigerant gas into the atmosphere are prevented. Further, in the case where the pipe needs to be removed, such removal has to be performed by a specialist who complies with chlorofluorocarbon gas regulations. This contributes to the reduction of the discharging amount of chlorofluorocarbon gas into the atmosphere.

In the above-mentioned configuration, when rotation torque which is required for fastening the coupling member to the joint body reaches a predetermined value, the first part of the coupling member may be disconnected from the second part of the coupling member by the rotation torque. In this case, the strength of the breaking point needs to be set to match the rotation torque. The operation will be simplified because the part including the holding surfaces is disconnected simultaneously when the operation of fastening the coupling member is completed. The operator has to be careful about a sudden decrease in the rotation torque when the part including the holding surfaces is disconnected.

In the above-mentioned configuration, the pipe connecting elements of the coupling member may be configured to be located inside the joint body and the holding portion can be configured to be located outside the joint body when the coupling member is fastened to the joint body. The first part of the coupling member is the holding portion located outside the joint body. Accordingly, since the part including the holding surfaces does not exist outside the joint body, it becomes extremely difficult to loosen the screwing between the joint body and the coupling member. In this specification, the pipe connecting elements include a coupling mechanism between the joint body and the coupling member, a sealing mechanism for the connecting part between the pipe and the joint body, and a supporting mechanism for the pipe.

In the above-mentioned configuration, the holding portion may include an outer annular part having the holding surfaces and an inner annular part arranged inside the outer annular part. The first part of the coupling member corresponds to the outer annular part of the holding portion, and the pipe connecting elements of the coupling member may be configured to be located inside the joint body and the holding portion may be configured to be located outside the joint body when the coupling member is fastened to the joint body. The outer annular part of the holding portion may be configured to remain existing around the inner annular part after being disconnected from the second part of the coupling member in order to prevent the usage of a fastening tool against the inner annular part. In this case, since the outer annular part disconnected from the coupling member obstructs the usage of a fastening tool, it becomes difficult to remove the pipe from the pipe joint after once connected.

In the above-mentioned configuration, a slit may be formed at the holding portion so that the holding portion is partitioned into an outer annular part having the holding surfaces and an inner annular part located inside the outer annular part. The first part of the coupling member corresponds to the outer annular part of the holding portion. The outer annular part may be connected to the second part of the coupling member with a thin-walled connecting portion and may be separated and disconnected from the second part of the coupling member by breakage of the connecting portion. With this configuration, the outer annular part which forms the holding surfaces can be disconnected by simple machining.

In the above-mentioned configuration, a slit of which the depth direction matches the radial direction of the coupling member may be formed at the coupling member. Accordingly, the coupling member is partitioned into the holding portion serving as the first part and the remaining part of the coupling member serving as the second part, and the holding portion is connected to the remaining part of the coupling member with a thin-walled connecting portion. The holding portion may be separated and disconnected from the second part of the coupling member by breakage of the connecting portion. In this manner, the entire holding portion can be disconnected with a simple configuration.

In the above-mentioned configuration, the slit is preferably positioned to substantially match an end surface of the joint body that is closer to the coupling member. Being configured as described above, the entire part of the coupling member projecting from the end part of the joint body can be disconnected with a simple configuration. Therefore, the remaining part of the coupling member cannot be removed from the joint body.

In the above-mentioned configuration, the joint body may include an external thread portion having an external thread as the screw portion on the outer circumferential surface thereof. The coupling member may include an internal thread cylinder portion which has an internal thread as the screw portion on the inner circumferential surface thereof and of which the outer circumferential surface is a cylindrical surface. The holding portion may be connected to the internal thread cylinder portion with a thin-walled connecting portion. The first part of the coupling member is the holding portion. The holding portion may be separated and disconnected from the second part of the coupling member by breakage of the connecting portion. Being configured as described above, the holding portion can be disconnected with a simple configuration.

In the above-mentioned configuration, the joint body may include a base portion having a nut portion and an attaching portion which is attached to the interconnecting device, an internal thread cylinder portion having an internal thread on the inner circumferential surface thereof as the screw portion which is screwed to the screw portion of the coupling member, and a ferrule connected to the base portion. The nut portion is held by a fastening tool when the coupling member is fastened to the joint body. The coupling member may include, in addition to the holding portion, an external thread portion having an external thread on the outer circumferential surface thereof as the screw portion which is screwed to the screw portion of the joint body, and a cam surface formed at the external thread portion. An end part of the ferrule may be configured to bite into a surface of the pipe by being guided by the cam surface when the coupling member is fastened to the joint body. In this case, it is possible to provide the bite type pipe joint in which at least the part of the coupling member including the holding surfaces of the holding portion can be disconnected.

In the above-mentioned configuration, the joint body may include a base portion having a nut portion and an attacking portion which is attached to the interconnecting device, an external thread portion having an external thread on the outer circumferential surface thereof as the screw portion which is screwed to the screw portion of the coupling member, and a ferrule which is connected to the external thread portion. The nut portion is held by a fastening tool when the coupling member is fastened to the joint body. The coupling member may include, in addition to the holding portion, an internal thread cylinder portion having an internal thread on the inner circumferential surface thereof as the screw portion which is screwed to the screw portion of the joint body, and a cam surface formed at the internal thread cylinder portion. An end part of the ferrule may be configured to bite into a surface of the pipe by being guided by the cam surface when the coupling member is fastened to the joint body. Also in this case, it is possible to provide the bite type pipe joint in which at least the part of the coupling member including the holding surfaces of the holding portion can be disconnected.

In the above-mentioned configuration, the joint body may include a base portion having a nut portion and an attaching portion which is attached to the interconnecting device, an internal thread cylinder portion having an internal thread on the inner circumferential surface thereof as the screw portion which is screwed to the screw portion of the coupling member, and a cam surface which is formed at the internal thread cylinder portion. The nut portion is held by a fastening tool when the coupling member is fastened to the joint body. The coupling member may include, in addition to the holding portion, an external thread portion having an external thread on the outer circumferential surface thereof as the screw portion which is screwed to the screw portion of the joint body, and a ferrule connected to the external thread portion. An end part of the ferrule is configured to bite into a surface of the pipe by being guided by the cam surface when the coupling member is fastened to the joint body. Also in this case, it is possible to provide the bite type pipe joint in which at least the part of the coupling member including the holding surfaces of the holding portion can be disconnected.

In the above-mentioned configuration, the joint body may include a base portion having a nut portion and an attaching portion which is attached to the interconnecting device, an external thread portion having an external thread on the outer circumferential surface thereof as the screw portion which is screwed to the screw portion of the coupling member, and a cam surface formed at the external thread portion. The nut portion is configured to be held by a fastening tool when the coupling member is fastened to the joint body. The coupling member may include, in addition to the holding portion, an internal thread cylinder portion having an internal thread on the inner circumferential surface thereof as the screw portion which is screwed to the screw portion of the joint body, and a ferrule connected to the internal thread cylinder portion. An end part of the ferrule is configured to bite into a surface of the pipe by being guided by the cam surface when the coupling member is fastened to the joint body. Also in this case, it is possible to provide the bite type pipe joint in which at least the part of the coupling member including the holding surfaces of the holding portion can be disconnected.

In the above-mentioned configuration, the joint body may include a base portion having a nut portion and an attaching portion which is attached to the interconnecting device, an external thread portion having an external thread on the outer circumferential surface thereof as the screw portion which is screwed to the screw portion of the coupling member, and a cam surface formed at the external thread portion. The nut portion is configured to be held by a fastening tool when the coupling member is fastened to the joint body. The coupling member may include, in addition to the holding portion, an internal thread cylinder portion having an internal thread on the inner circumferential surface thereof as the screw portion which is screwed to the screw portion of the joint body. The pipe joint may further include a ferrule formed separately from the joint body and the coupling member. The ferrule is preferably located between the joint body and the coupling member. The ferrule may be configured to be pressed by the internal thread cylinder portion of the coupling member and an end part of the ferrule is configured to bite into a surface of the pipe by being guided by the cam surface when the coupling member is fastened to the joint body. Also in this case, it is possible to provide the bite type pipe joint in which at least the part of the coupling member including the holding surfaces of the holding portion can be disconnected.

In the above-mentioned configuration, the joint body may include a base portion having a nut portion and an attaching portion which is attached to the interconnecting device, an external thread portion having an external thread on the outer circumferential surface thereof as the screw portion which is screwed to the screw portion of the coupling member, and a flare receiving surface formed at the external thread portion. The coupling member may include, in addition to the holding portion, an internal thread cylinder portion having an internal thread on the inner circumferential surface thereof as the screw portion which is screwed to the screw portion of the joint body, and a flare pressing surface formed at the internal thread cylinder portion. A flare portion which is formed at a distal end of the pipe is preferably pinched between the flare receiving surface and the flare pressing surface when the coupling member is fastened to the joint body. In this case, it is possible to provide the flared pipe joint in which at least the part of the coupling member including the holding surfaces of the holding portion can be disconnected.

In the above-mentioned configuration, the pipe connecting elements of the coupling member may be configured to be located inside the internal thread cylinder portion when the coupling member is fastened to the joint body. In this case, the internal thread cylinder portion can be the outer circumference wall for the pipe connecting elements of the coupling member and the joint body after the pipe connecting is completed. Therefore, the screwed part of the joint body and the coupling member is prevented from being loosened.

In the above-mentioned configuration, the joint body may include a cylindrical protecting cover which surrounds the ferrule. In this case, the outer surface of the ferrule is prevented from being scratched in the process of handling parts.

In the above-mentioned configuration, the internal thread cylinder portion and the pipe connecting elements of the coupling member may be configured to be located inside the protecting cover when the coupling member is fastened to the joint body. In this case, the protecting cover can be the outer circumference wall for the pipe connecting elements of the coupling member and the joint body after the pipe connecting is completed. Therefore, the screwed part of the joint body and the coupling member is prevented from being loosened.

In the above-mentioned configuration, the joint body may include a cylindrical outer circumference cover capable of covering the internal thread cylinder portion of the coupling member when the coupling member is fastened to the joint body. The pipe connecting elements of the coupling member may be configured to be located inside the outer circumference cover when the coupling member is fastened to the joint body. Being configured as described above, the internal thread cylinder portion of the coupling member and the pipe connecting elements are accommodated in the outer circumference cover when the coupling member has been fastened to the joint body. Therefore, the outer circumferential surface of the internal thread cylinder portion can be prevented from being used as the holding portion for loosening the coupling member.

With regard to each of the above-mentioned bite type pipe joints, the ferrule may remain being connected to the base portion of the joint body after the coupling member has been fastened to the joint body. Further, both of the outer circumferential surface and the inner circumferential surface of the ferrule may be substantially shaped like inverted V in a cross section along a plane including the center axis of the joint body. The ferrule may be configured such that both of the distal end and the proximal end thereof bite into the surface of the pipe. In this case, the sealing performance and the pipe holding function by the ferrule are also improved.

With regard to each of the above-mentioned bite type pipe joints, the ferrule may be separated from the external thread portion of the joint body in the process of fastening the coupling member to the joint body. In this case, the pipe surface and the cam surface are prevented from being unnecessarily scratched by the ferrule during the coupling operation, which leads to improvement of the sealing performance.

In the above-mentioned configuration, the second part of the coupling member may include an engaging portion formed to engage a special tool with the second part after the first part is disconnected. By engaging the special tool with the engaging portion, the second part of the coupling member after the first part is disconnected can be unscrewed from the joint body. In this case, when the pipe connecting is re-performed, further specifically, the remaining part of the coupling member which remains at the joint body as being screwed after the part of the coupling member including the holding surfaces is disconnected can be loosened and removed by using the special tool. Therefore, the connected pipe can be removed in a state where the joint body remains. Then, the pipe can be connected again to the joint body by using a new coupling member.

In the above-mentioned configuration, the engaging portion may be an engaging hole with which an engaging projection formed at the special tool is engaged. In this case, no member is needed between the holding portion and the remaining part of the coupling member. Therefore, it is easy to form the holding portion which is to be disconnected integrally with the remaining part with a slight clearance. Accordingly, the coupling member can be formed compactly.

In the above-mentioned configuration, the second part of the coupling member may include an engaging hole formed to engage an engaging projection of a special tool with the second part after the first part is disconnected. The second part of the coupling member after the first part is disconnected can be unscrewed from the joint body by engaging the engaging projection of the special tool with the engaging hole. A lightening hole may be formed by penetrating the holding portion. The engaging hole of the second part may be formed through the lightening hole. In this case, when machining the engaging hole in which the engaging projection of the special tool is inserted, the lightening hole is machined at the side of the holding portion from the side opposite to the joint body and the engaging hole can be machined on the extension of the machining process. On the contrary, when the lightening hole is not machined, the engaging hole cannot be machined from the side opposite to the joint body.

In the above-mentioned configuration, the engaging hole may be formed by penetrating the second part of the coupling member. Even though the engaging hole is a through hole, there is no functional problem in engaging with the engaging projection. From a viewpoint of machining, the engaging hole can be machined at the coupling member from either of the side opposite to the joint body or the side of the joint body. Therefore, in this case, the lightening hole of the holding portion does not necessarily need to be formed.

In the above-mentioned configuration, the joint body may include an internal thread cylinder portion having an internal thread on the inner circumferential surface thereof as the screw portion which is screwed to the screw portion of the coupling member, and a cam surface formed at the internal thread cylinder portion. The second part of the coupling member may include an external thread portion having an external thread on the outer circumferential surface thereof as the screw portion which is screwed to the screw portion of the joint body, and a substantially cylindrical ferrule connected to the external thread portion with a thin-walled portion. The external thread portion may include a cylindrical circumference wall which extends to surround the ferrule. A first notch may be formed on the inner circumferential surface of the distal part of the ferrule. Accordingly, a distal edge defined by a part of surface which defines the first notch and the inner circumferential surface of the ferrule is formed at the distal part of the ferrule. A second notch may be formed on the inner circumferential surface of the proximal part of the ferrule. Accordingly, the thin-walled portion is formed at the proximal part of the ferrule. The ferrule includes a proximal edge defined by the proximal surface of the ferrule and the inner circumference of the ferrule. The distal end of the ferrule may be configured to be pressed in between the pipe and the joint body by initial hand-fastening for coupling the coupling member with the joint body. The distal edge and the proximal edge may be configured to bite into the pipe by deformation of the ferrule centered around the thin-walled portion which is formed by the second notch. In this case, the entire holding portion can be configured to be disconnected in the bite type pipe joint which uses the ferrule having excellent sealing performance and pipe holding force.

In other embodiments of the present invention, a refrigeration apparatus or a heat pump water heating apparatus which uses the above-mentioned pipe joint at a refrigerant circuit is provided. In such refrigeration apparatus and heat pump water heating apparatus, refrigerant leaking at the pipe joint decreases thereby to improve the reliability of the products.

### BRIEF DESCRIPTION OF THE DRAWINGS

Fig. 1 is a half cross-sectional view illustrating the configuration of a pipe joint according to a first embodiment of the present invention in an assembled state before the pipe joint is fastened;
Fig. 2 is a side view of the pipe joint according to the first embodiment as viewed from the front;
Fig. 3 is a cross-sectional view illustrating a process of fastening the pipe joint according to the first embodiment in a state where a distal end of a ferrule contacts a cam surface;
Fig. 4 is a cross-sectional view illustrating the process of fastening the pipe joint according to the first embodiment in a state where the ferrule is separated;
Fig. 5 is a cross-sectional view illustrating the process of fastening the pipe joint according to the first embodiment in a state where the fastening is about to be completed;
Fig. 6 is a cross-sectional view illustrating the process of fastening the pipe joint according to the first embodiment in a state where the fastening is completed;
Fig. 7 is an enlarged cross-sectional view illustrating the vicinity of the ferrule of the pipe joint according to the first embodiment in a state where the ferrule contacts the cam surface;
Fig. 8 is an enlarged cross-sectional view illustrating the vicinity of the ferrule of the pipe joint according to the first embodiment in a state where the ferrule bites into the surface of a pipe;
Fig. 9 is a cross-sectional view illustrating the configuration of a pipe joint according to a second embodiment of the present invention in a state where a ferrule is separated;
Fig. 10 is a cross-sectional view illustrating a process of fastening the pipe joint according to the second embodiment in a state where the fastening is completed;
Fig. 11 is a half cross-sectional view illustrating the configuration of a pipe joint according to a third embodiment of the present invention in an assembled state before the pipe joint is fastened;
Fig. 12 is a cross-sectional view illustrating a process of fastening the pipe joint according to the third embodiment in a state where the fastening is about to be completed;
Fig. 13 is a cross-sectional view illustrating the process of fastening the pipe joint according to the third embodiment in a state where the fastening is completed;
Fig. 14 is a partial cross-sectional view illustrating the configuration of a pipe joint according to a fourth embodiment of the present invention in a state where the fastening is about to be completed;
Fig. 15 is a cross-sectional view illustrating a process of fastening the pipe joint according to the fourth embodiment in a state where the fastening is completed;
Fig. 16 is a partial cross-sectional view illustrating the configuration of a pipe joint according to a fifth embodiment of the present invention in a state where a ferrule contacts a cam surface;
Fig. 17 is a cross-sectional view illustrating a process of fastening the pipe joint according to the fifth embodiment in a state where the fastening is about to be completed;
Fig. 18 is a cross-sectional view illustrating the process of fastening the pipe joint according to the fifth embodiment in a state where the fastening is completed;
Fig. 19 is a half cross-sectional view illustrating the configuration of a pipe joint according to a sixth embodiment of the present invention in an assembled state before the pipe joint is fastened;
Fig. 20 is a cross-sectional view illustrating a process of fastening the pipe joint according to the sixth embodiment in a state where the fastening is about to be completed;
Fig. 21 is a cross-sectional view illustrating the process of fastening the pipe joint according to the sixth embodiment in a state where the fastening is completed;
Fig. 22 is a partial cross-sectional view illustrating the configuration of a pipe joint according to a seventh embodiment of the present invention in a state where the fastening is about to be completed;
Fig. 23 is a cross-sectional view illustrating a process of fastening the pipe joint according to the seventh embodiment in a state where the fastening is completed;
Fig. 24 is a half cross-sectional view illustrating the configuration of a pipe joint according to an eighth embodiment of the present invention in an assembled state before the pipe joint is fastened;
Fig. 25 is a cross-sectional view illustrating a process of fastening the pipe joint according to the eighth embodiment in a state where the fastening is about to be completed;
Fig. 26 is a cross-sectional view illustrating the process of fastening the pipe joint according to the eighth embodiment in a state where the fastening is completed;
Fig. 27 is a cross-sectional view illustrating the configuration of a pipe joint according to a ninth embodiment of the present invention in a state where the fastening is about to be completed;
Fig. 28 is a cross-sectional view illustrating a process of fastening the pipe joint according to the ninth embodiment in a state where the fastening is completed;
Fig. 29 is a half cross-sectional view illustrating the configuration of a pipe joint according to a tenth embodiment of the present invention in an assembled state before the pipe joint is fastened;
Fig. 30 is a cross-sectional view illustrating a process of fastening the pipe joint according to the tenth embodiment in a state where the fastening is about to be completed;
Fig. 31 is a cross-sectional view illustrating the process of fastening the pipe joint according to the tenth embodiment in a state where the fastening is completed;
Fig. 32 is a cross-sectional view illustrating the configuration of a pipe joint according to an eleventh embodiment of the present invention in a state where the fastening is about to be completed;
Fig. 33 is a cross-sectional view illustrating a process of fastening the pipe joint according to the eleventh embodiment in a state where the fastening is completed;
Fig. 34 is a cross-sectional view illustrating the configuration of a pipe joint according to a twelfth embodiment of the present invention in an assembled state before the pipe joint is fastened;
Fig. 35 is a cross-sectional view illustrating a process of fastening the pipe joint according to the twelfth embodiment in a state where the fastening is completed;
Fig. 36 is a half cross-sectional view illustrating the configuration of a pipe joint according to the thirteenth embodiment of the present invention in an assembled state before the pipe joint is fastened;
Fig. 37 is a side view of the pipe joint according to the thirteenth embodiment as viewed from the front;
Fig. 38 is a cross-sectional view illustrating a process of fastening the pipe joint according to the thirteenth embodiment in a state where the fastening is about to be completed;
Fig. 39 is a cross-sectional view illustrating the process of fastening the pipe joint according to the thirteenth embodiment in a state where the fastening is completed;
Fig. 40 is a half cross-sectional view illustrating the configuration of a pipe joint according to a fourteenth embodiment of the present invention in a state where the fastening is about to be completed;
Fig. 41 is a half cross-sectional view illustrating a process of fastening the pipe joint according to the fourteenth embodiment in a state where the fastening is completed;
Fig. 42 is a cross-sectional view illustrating the configuration of a pipe joint according to a fifteenth embodiment of the present invention in a state where the fastening is about to be completed;
Fig. 43 is a partial cross-sectional view illustrating the configuration of a pipe joint according to a sixteenth embodiment of the present invention in a state where a ferrule contacts a cam surface;
Fig. 44 is a cross-sectional view illustrating a process of fastening the pipe joint according to the sixteenth embodiment in a state where the fastening is completed;
Fig. 45 is an enlarged cross-sectional view illustrating the vicinity of the ferrule of the pipe joint according to the sixteenth embodiment in a state where the ferrule bites into the surface of a pipe;
Fig. 46 is a cross-sectional view illustrating the configuration of a pipe joint according to a seventeenth embodiment of the present invention in a state where the fastening is completed;
Fig. 47 is a half cross-sectional view illustrating the configuration of a pipe joint according to an eighteenth embodiment of the present invention in a state where the fastening is about to be completed;
Fig. 48 is a half cross-sectional view illustrating the configuration of a pipe joint according to a nineteenth embodiment of the present invention in a state where the fastening is about to be completed;
Fig. 49 is a cross-sectional view illustrating the configuration of a pipe joint according to a twentieth embodiment of the present invention in a state where the fastening is about to be completed;
Fig. 50 is a cross-sectional view illustrating a process of fastening the pipe joint according to the twentieth embodiment in a state where the fastening is completed;
Fig. 51 is a side view of the pipe joint according to the twentieth embodiment in the state as illustrated in Fig. 49, as viewed from the front;
Fig. 52 is an external view illustrating a special tool for use in the pipe joint according to the twentieth embodiment;
Fig. 53 is an external view illustrating a special tool according to a twenty-first embodiment of the present invention;
Fig. 54 is a cross-sectional view illustrating an example of how the special tool of Fig. 53 is used;
Fig. 55 is a cross-sectional view illustrating the configuration of a pipe joint according to a twenty-second embodiment of the present invention in a state where the fastening is about to be completed;
Fig. 56 is a cross-sectional view illustrating the configuration of a modification of the pipe joint according to the twenty-second embodiment in a state where the fastening is about to be completed;
Fig. 57 is a half cross-sectional view illustrating a coupling member of a pipe joint according to a twenty-third embodiment of the present invention;
Fig. 58 is a side view of the coupling member of Fig. 57 as viewed from the front;
Fig. 59 is a cross-sectional view illustrating the configuration of the pipe joint according to the twenty-third embodiment in a state where the fastening is completed;
Fig. 60 is a half cross-sectional view illustrating the configuration of a pipe joint according to a twenty-fourth embodiment of the present invention in a state where a ferrule contacts a cam surface;
Fig. 61 is an enlarged cross-sectional view illustrating the vicinity of the ferrule of the pipe joint according to the twenty-fourth embodiment;
Figs. 62(a) to 62(c) are fastening process diagrams, while Fig. 62(a) illustrates a state where a pipe is temporally held, Fig. 62(b) illustrates a state where a ferrule is separated, and Fig. 62(c) illustrates a state where the fastening is completed;
Fig. 63 is a cross-sectional view illustrating a process of fastening the pipe joint according to the twenty-fourth embodiment in a state where the fastening is about to be completed; and
Fig. 64 is a cross-sectional view illustrating the process of fastening the pipe joint according to the twenty-fourth embodiment in a state where the fastening is completed.

### BEST MODE FOR CURRYING OUT THE INVENTION

Hereinafter, embodiments of the present invention will be described with reference to the drawings. The same numeral is given to the common elements in respective embodiments and redundant description is omitted or simplified.

### (First Embodiment)

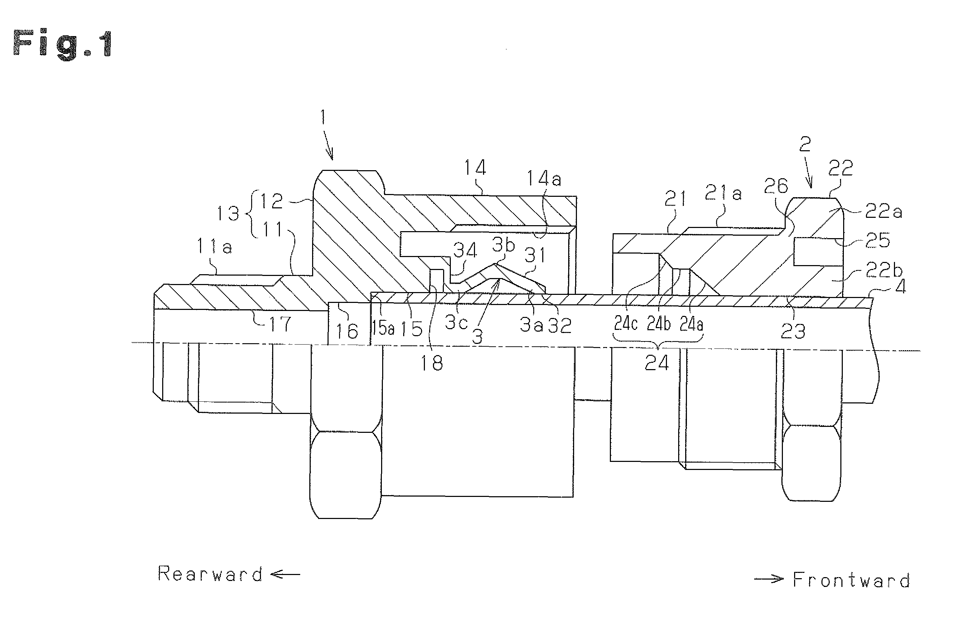

A pipe joint according to a first embodiment of the present invention will now be described with reference to Figs. 1 to 8. The pipe joint according to the first embodiment is a bite type pipe joint which is used for a refrigerant circuit of a refrigeration apparatus, a heat pump water heating apparatus and the like. The configuration thereof is illustrated in Fig. 1. Fig. 1 is a half cross-sectional view of the bite type pipe joint.

As illustrated in Fig. 1, the bite type pipe joint includes a joint body 1 and a coupling member 2. The joint body 1 is attached to an interconnecting device and a pipe 4 is inserted into the joint body 1. The coupling member 2 is arranged around the pipe 4, which is inserted into the joint body 1, and is fastened to the joint body 1 by screwing. In the following description, the rear indicates the direction toward the joint body 1 from the coupling member 2, that is, the left side in Fig. 1. The front indicates the direction toward the coupling member 2 from the joint body 1, that is, the right side in Fig. 1. These indications are the same in the embodiments described below unless otherwise specified.

As illustrated in Fig. 1, the joint body 1 includes a base portion 13 and an internal thread cylinder portion 14. The base portion 13 includes an attaching portion 11 which is attached to the interconnecting device such as a closing valve, a container, or a pipe, and a nut portion 12 which is held by a fastening tool when the coupling member 2 is fastened to the joint body 1. An internal thread 14a serving as a screw portion which is screwed to a screw portion of the coupling member 2 discussed below is formed on the inner circumferential surface of the internal thread cylinder portion 14. The joint body 1 has an annular ferrule 3 which extends from the end surface of the base portion 13 that is closer to the coupling member 2. The ferrule 3 is formed integrally with the base portion 13 and is arranged inside the internal thread cylinder portion 14. A pipe connecting port 15 into which the distal end of the pipe 4 is inserted is formed at the center axial part of the joint body 1. A large diameter communicating hole 16 and a small diameter communicating hole 17 are formed rearward of the pipe connecting port 15. An external thread 11a is formed on the outer circumferential surface of the attaching portion 11.

The hole diameter of the pipe connecting port 15 is substantially the same as the outer diameter of the pipe 4 which is to be connected to the pipe connecting port 15. A stepped portion (a counter bore) 15a is formed between the pipe connecting port 15 and the communicating hole 17. The insertion depth of the pipe 4 to the joint body 1 is always constant by causing the distal surface of the pipe 4 to contact the stepped portion 15a.

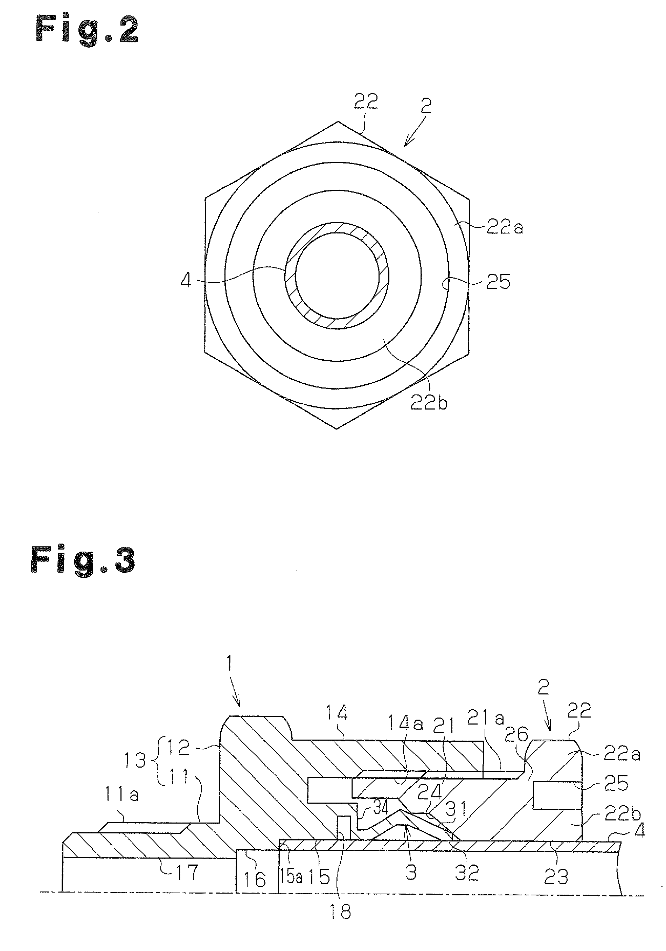

As illustrated in Fig. 1, the coupling member 2 includes an external thread portion 21 and a holding portion 22 which are integrally formed with each other. An external thread 21a serving as a screw portion which is screwed to the internal thread 14a of the joint body 1 is formed on the outer circumferential surface of the external thread portion 21. A pair of or a plurality of pairs of holding surfaces which are mutually parallel at opposite positions are formed on the outer circumferential surface of the holding portion 22 so that the holding portion 22 can be held with a fastening tool when the joint body 1 is fastened to the coupling member 2. In the first embodiment, the external form of the holding portion 22 is shaped like a hexagonal nut. The holding portion 22 is formed at the front end of the coupling member 2, that is, at the end of the coupling member 2 that is apart from the joint body 1. As described below, the holding portion 22 is located outside the joint body 1 when the coupling member 2 has been fastened to the joint body 1. As illustrated in Figs. 1 and 2, an annular slit 25 is formed at the front end surface of the holding portion 22. The holding portion 22 is partitioned into an outer annular part 22a and an inner annular part 22b by the slit 25. Since the depth direction of the slit 25 is parallel to the axis of the coupling member 2, the outer annular part 22a of the holding portion 22 is connected to the external thread portion 21 with a thin-walled connecting portion 26. When the rotation torque required for fastening the coupling member 2 to the joint body 1 reaches a predetermined value, that is, when the coupling member 2 has been fastened, the connecting portion 26 is broken. When the connecting portion 26 is broken, the outer annular part 22a is separated from the external thread portion 21. As a result, it becomes impossible to handle the coupling member 2 by using a general fastening tool.

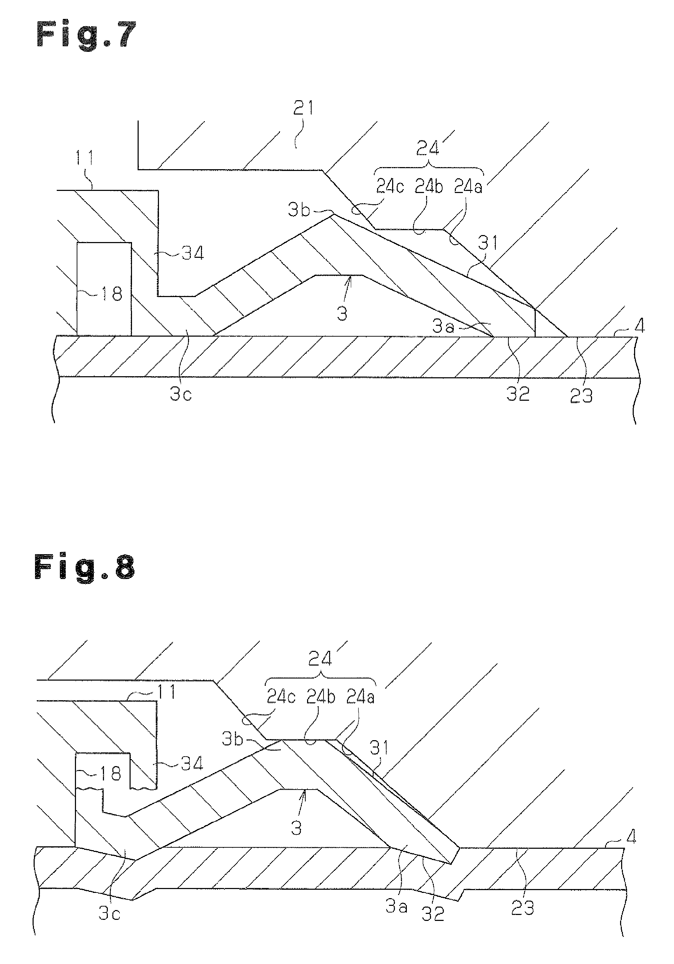

A pipe through hole 23 is formed at the center axial part of the coupling member 2. The pipe through hole 23 is communicated with a space defined by a cam surface 24 formed at the inner side of the external thread portion 21 of the coupling member 2. Basically, the cam surface 24 is a conical surface of which the diameter increases toward the rear side, that is, toward the joint body 1. However, as illustrated in Fig. 7, the middle part of the cam surface 24 is a cylindrical surface 24b. Accordingly, the cam surface 24 is formed by a small diameter conical surface 24a positioned at the front side, a large diameter conical surface 24c positioned at the rear side, and the cylindrical surface 24b positioned between the small diameter conical surface 24a and the large diameter conical surface 24c. The diameter of the cylindrical surface 24b is smaller than the outer diameter of a maximum diameter part 3b of the ferrule 3 discussed below.

The ferrule 3 has a substantially constant thickness and includes a proximal part 3c of which the diameter increases as the distance from the base portion 13 increases and a distal part 3a of which the diameter decreases as the distance from the base portion 13 increases. Consequently, both of the outer circumferential surface and the inner circumferential surface of the ferrule 3 are substantially shaped like inverted V in a cross section along a plane including the center axis of the joint body 1. The outer circumferential surface of the distal part 3a is a tapered surface 31 capable of contacting the cam surface 24 of the coupling member 2. The angle of the tapered surface 31 in relation to the center axis of the joint body 1 is slightly smaller than the angle of the cam surface 24 in relation to the center axis of the coupling member 2. The maximum diameter part 3b is a part of the ferrule 3 located between the proximal part 3c and the distal part 3a. The ferrule 3 has a center hole 32 through which the pipe 4 inserted into the joint body 1 passes. The minimum diameter of the center hole 32 is the same as the inner diameter of the pipe connecting port 15. The ferrule 3 is connected to the base portion 13 at the proximal part 3c with a thin-walled portion 34. A pressing surface 18 which presses the proximal part 3c of the ferrule 3 is formed rearward of the thin-walled portion 34.

A pipe connecting method with the bite type pipe joint according to the first embodiment as structured above will be described hereinafter.

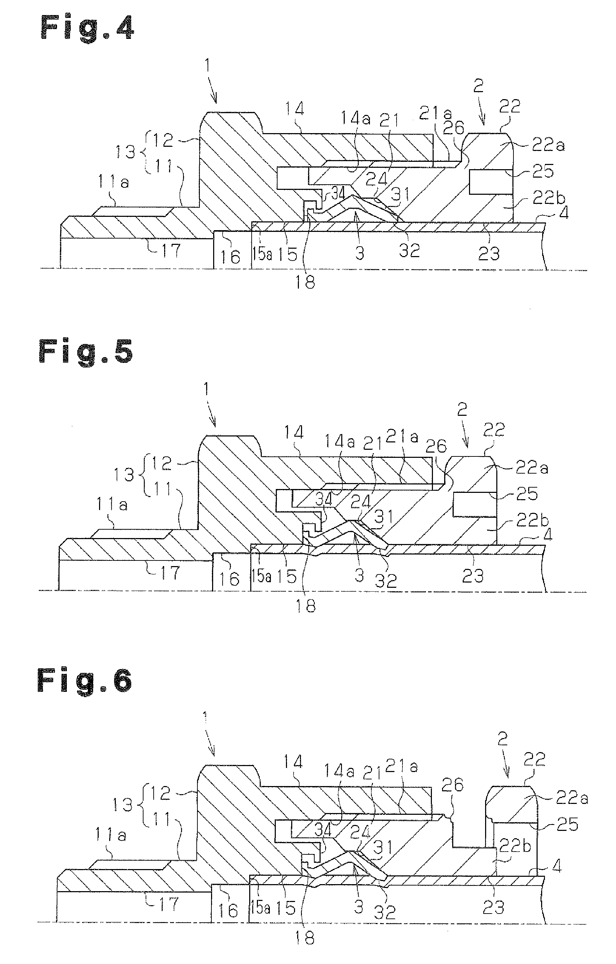

At the time of connecting the pipe 4 to the bite type pipe joint, first, the joint body 1 is attached to a predetermined interconnecting device such as a pipe, a container, or a closing valve of an apparatus. Next, the pipe 4 is inserted into the pipe through hole 23 of the coupling member 2 so that the coupling member 2 is arranged around the pipe 4. Then, the distal end of the pipe 4 is inserted into the pipe connecting port 15 through the center hole 32 of the ferrule 3 to cause the distal surface of the pipe 4 to contact the stepped portion 15a. Fig. 1 illustrates the state of that time. Next, the coupling member 2 is fastened to the joint body 1 by screwing the external thread 21a of the coupling member 2 with the internal thread 14a of the joint body 1. The coupling until the ferrule 3 contacts the cam surface 24 of the coupling member 2 as illustrated in Figs. 3 and 7 can be performed by hand without using a fastening tool. However, the subsequent fastening is performed by using a fastening tool. In the above-mentioned process of fastening the coupling member 2 to the joint body 1, the thin-walled portion 34 receives force in the axial direction from the small diameter conical surface 24a of the cam surface 24 with the distal part 3a of the ferrule 3. As a result, the thin-walled portion 34 is broken as illustrated in Fig. 4. The thin-walled portion 34 extends from the minimum diameter part of the proximal part 3c of the ferrule 3. Therefore, the thin-walled portion 34 is relatively small and relatively easy to be broken.

The ferrule 3 which is separated from the base portion 13 due to the breakage of the thin-walled portion 34 movers rearward by further fastening the coupling member 2 to the joint body 1 so that the proximal part 3c contacts the pressing surface 18. Then, as illustrated in Fig. 5, the distal part 3a of the ferrule 3 is pressed in the axial direction by the small diameter conical surface 24a of the cam surface 24 and the proximal part 3c of the ferrule 3 is pressed in the axial direction by the pressing surface 18. Further, the maximum diameter part 3b of the ferrule 3 is pressed in the radial direction by the cylindrical surface 24b of the cam surface 24. As a result, as illustrated in Fig. 8, the ferrule 3 is deformed so that the distal part 3a and the proximal part 3c bite into the surface of the pipe 4. This operation seals not only the boundary between the proximal part 3c of the ferrule 3 and the pressing surface 18 and the boundary between the surface of the pipe 4 and the proximal part 3c, but also the boundary between the tapered surface 31 of the ferrule 3 and the small diameter conical surface 24a of the cam surface 24 and the boundary between the distal part 3a of the ferrule 3 and the surface of the pipe 4. After the biting by the distal part 3a and the proximal part 3c of the ferrule 3 to the surface of the pipe 4 progresses to a some extent, the rotation torque required for coupling the coupling member 2 reaches the predetermined value so that the fastening of the coupling member 2 is completed. At that time, pipe connecting elements such as the external thread 21a and the cam surface 24 of the coupling member 2 are located inside the joint body 1. Only the holding portion 22 is located outside the joint body 1. Further, when the rotation torque reaches the predetermined value, the stress acting on the connecting portion 26 of the coupling member 2 breaks the connecting portion 26. As a result, as illustrated in Fig. 6, the outer annular part 22a including the holding surfaces is separated and disconnected from the external thread portion 21. Therefore, after the connecting of the pipe 4 to the bite type pipe joint is completed, the coupling member 2 cannot be handled by using a general fastening tool. In Fig. 6, the outer annular part 22a separated from the external thread portion 21 is illustrated as being floated in the air. Actually, however, the outer annular part 22a remains on the pipe 4 while being supported by the pipe 4. The outer circumferential surface of the inner annular part 22b of the holding portion 22 which remains after the outer annular part 22a is separated from the external thread portion 21 is a cylindrical surface. Therefore, the inner annular part 22b cannot be held with a general fastening tool such as a spanner or a monkey wrench.

The bite type pipe joint according to the first embodiment as structured above has following advantages.

When the rotation torque required for fastening the coupling member 2 to the joint body 1 reaches the predetermined value, the fastening of the coupling member 2 is completed and the outer annular part 22a including the holding surfaces of the holding portion 22 is separated and disconnected from the external thread portion 21. Therefore, once the pipe 4 is connected to the bite type pipe joint, it is impossible to handle the coupling member 2 by using a general fastening tool. Accordingly, no one can easily loosen the screwed part of the pipe joint and remove the pipe 4 thereafter. This prevents improper leakage and discharge of refrigerant gas such as chlorofluorocarbon gas into the atmosphere. Further, in the case where the pipe 4 needs to be removed, such removal has to be performed by a specialist who complies with chlorofluorocarbon regulations. In this manner, the bite type pipe joint according to the first embodiment contributes to the reduction of the amount of chlorofluorocarbon discharged into the atmosphere.

By forming a slit 25 at the holding portion 22 of the coupling member 2, the outer annular part 22a of the holding portion 22 is connected to the external thread portion 21 with the thin-walled connecting portion 26. Therefore, adjusting the thickness of the connecting portion 26 easily enables the connecting portion 26 to be broken at an appropriate rotation torque value.

Since the ferrule 3 is formed integrally with the joint body 1, the time and effort of controlling the ferrule 3 separately from the joint body 1 are eliminated. Further, since the distal part 3a and the proximal part 3c of the ferrule 3 bite into the surface of the pipe 4, the pipe joint achieves high sealing performance and holds the pipe 4 securely. Further, the ferrule 3 is separated from the joint body 1 in the process of fastening the coupling member 2 to the joint body 1. This makes it possible to prevent the decrease in the sealing performance caused by unnecessary scratches which are made during the coupling by the ferrule 3 onto the surface of the pipe 4 and the cam surface 24. Furthermore, since the size of the thin-walled portion 34 which connects the ferrule 3 to the base portion 13 of the joint body 1 is relatively small, the ferrule 3 is separated by relatively small force.

In addition, in a refrigeration apparatus and a heat pump water heating apparatus which use the bite type pipe joint according to the present embodiment at a refrigerant circuit thereof, improper leakage of the refrigerant from the pipe joint is prevented, which leads to improvement of the reliability of these apparatuses.

### (Second Embodiment)

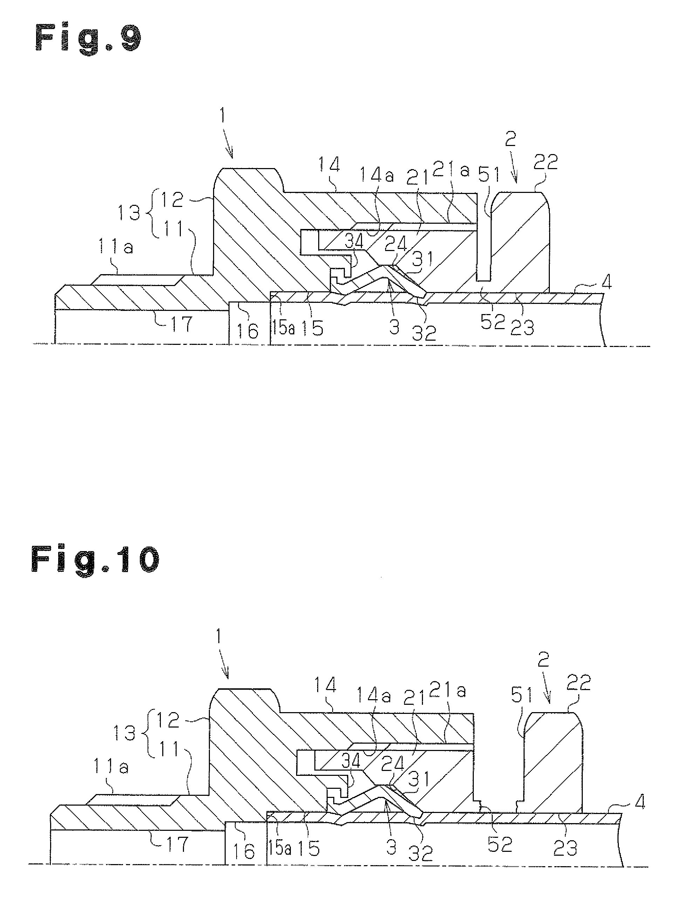

Next, a second embodiment of the present invention will be described with reference to Fig. 9 and 10. The second embodiment is different from the first embodiment in that the entire holding portion 22, which is located outside the joint body 1 when the coupling member 2 has been fastened to the joint body 1, is separated and disconnected from the remaining part of the coupling member 2.

As illustrated in Fig. 9, in the second embodiment, a slit 51 is formed at the outer circumference of the coupling member 2 at the position substantially aligned with a front end surface of the internal thread cylinder portion 14 in a state where the coupling member 2 has been fastened to the joint body 1. The coupling member 2 is partitioned into the external thread portion 21 and the holding portion 22 by the slit 51. More specifically, the surface close to the joint body 1 among the surfaces which define the slit 51 is positioned to substantially align with the end surface of the internal thread cylinder portion 14. Since the slit 51 is formed so that the depth direction is matched with the radial direction of the coupling member 2, the holding portion 22 is connected to the external thread portion 21 with a thin-walled connecting portion 52. When the rotation torque required for fastening the coupling member 2 to the joint body 1 reaches a predetermined value, that is, when the fastening of the coupling member 2 is completed, the connecting portion 52 is broken and the holding portion 22 is separated from the external thread portion 21, as illustrated in Fig. 10. As described above, in the second embodiment, the slit 51 is formed in place of the slit 25 of the first embodiment. The rest of the configuration is the same as that of the first embodiment.

With regard to a bite type pipe joint according to the second embodiment, the entire part of the coupling member 2 located outside the joint body 1, that is, the entire holding portion 22, is separated from the external thread portion 21 when the rotation torque required for the coupling reaches the predetermined value. Therefore, it is extremely difficult to loosen the screwed part of the joint body 1 and the coupling member 2.

Further, adjusting the thickness of the connecting portion 52 easily enables the connecting portion 52 to be broken at an appropriate rotation torque value.

Obviously, the second embodiment has the same advantages produced by components which are similar to those of the second embodiment among the advantages of the first embodiment.

### (Third Embodiment)

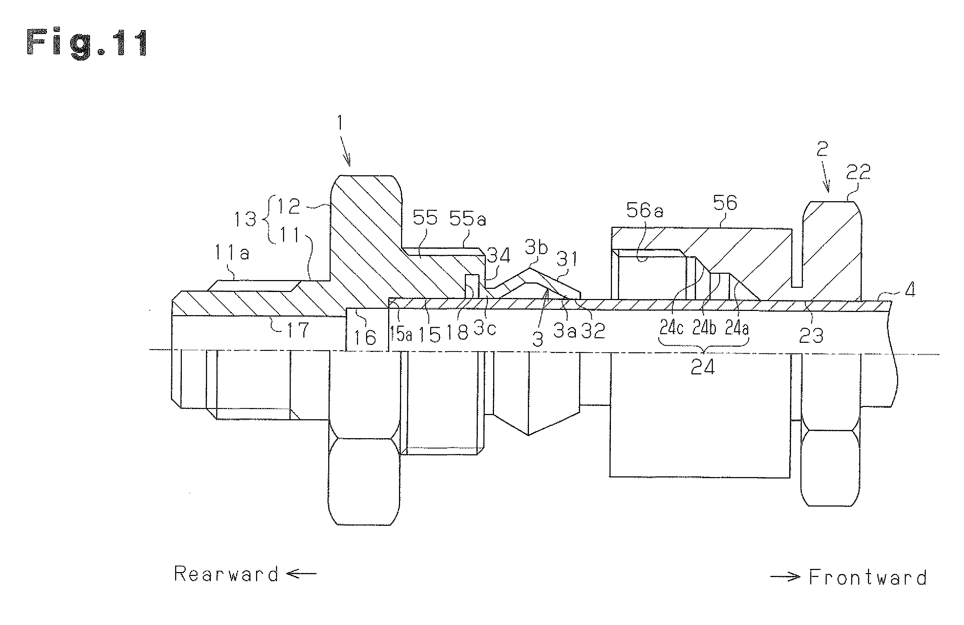

Next, a third embodiment of the present invention will be described with reference to Figs. 11 to 13. As illustrated in Fig. 11, the third embodiment is different from the second embodiment mainly in that an external thread portion 55 is formed at the joint body 1 in place of the internal thread cylinder portion 14, and an internal thread cylinder portion 56 is formed at the coupling member 2 in place of the external thread portion 21.

An external thread 55a is formed on the outer circumferential surface of the external thread portion 55 of the joint body 1 as the screw portion which is screwed to the screw portion of the coupling member 2. The ferrule 3 is extended frontward from the end part of the external thread portion 55 that is closer to the coupling member 2 and is formed integrally with the external thread portion 55 with the thin-walled portion 34. The ferrule 3 has a structure that is similar to those of the first and second embodiments except for being connected to the external thread portion 55 in place of the base portion 13. An internal thread 56a is formed on the inner circumferential surface of the internal thread cylinder portion 56 of the coupling member 2 as the screw portion which is screwed to the screw portion of the joint body 1. The outer circumferential surface of the internal thread cylinder portion 56 is a cylindrical surface. A slit 51 that is similar to that of the second embodiment is formed on the outer circumference of the coupling member 2. The coupling member 2 is partitioned into the internal thread cylinder portion 56 and the holding portion 22 by the slit 51. The cam surface 24 formed at the end part of the coupling member 2 that is closer to the joint body 1 has a structure that is similar to those of the first and the second embodiments. The rest of the configuration is the same as that of the second embodiment.

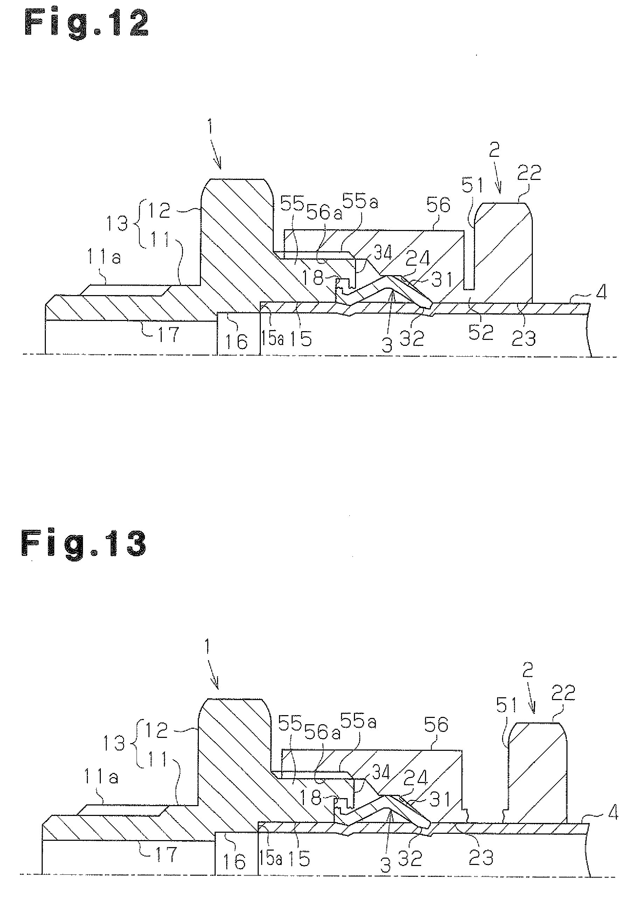

With regard to the bite type pipe joint according to the third embodiment, the coupling member 2 is fastened to the joint body 1 by screwing the internal thread 56a of the coupling member 2 to the external thread 55a of the joint body 1, as illustrated in Fig. 12. Then, when the fastening is completed, the holding portion 22 is separated from the internal thread cylinder portion 56, as illustrated in Fig. 13. Since the internal thread cylinder portion 56 has no holding surfaces, it is difficult to remove the coupling member 2 from the joint body 1 by operating the coupling member 2 after the holding portion 22 is separated from the internal thread cylinder portion 56.

Obviously, the third embodiment has the same advantages produced by the structures which are similar to those in the third embodiment among the advantages of the second embodiment.

### (Fourth Embodiment)

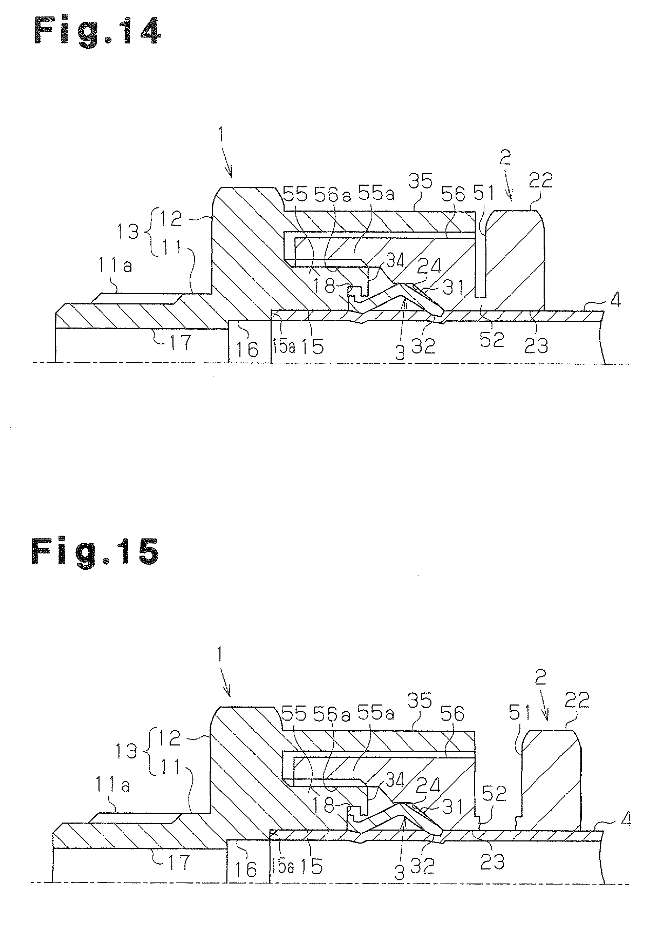

Next, a fourth embodiment of the present invention will be described with reference to Figs. 14 and 15. A bite type pipe joint according to the fourth embodiment differs from the bite type pipe joint according to the third embodiment in including a protecting cover 35 for protecting the ferrule 3.

In the third embodiment, the ferrule 3 which greatly affects sealing performance is exposed outside the joint body 1 without any protection by the joint body 1. Therefore, the outer surface of the ferrule 3 is vulnerable to scratches before being used for connecting the pipe 4. As illustrated in Fig. 14, in order to prevent the above, the bite type pipe joint according to the fourth embodiment has the cylindrical protecting cover 35 extending frontward from the nut portion 12 and surrounding the ferrule 3. The distal end of the protecting cover 35 is positioned further frontward than the distal end of the ferrule 3. The distal end of the protecting cover 35 forms the front end of the joint body 1. As illustrated in Fig. 15, the pipe connecting elements such as the internal thread cylinder portion 56 and the cam surface 24 of the coupling member 2 are located inside the protecting cover 35 when the coupling member 2 has been fastened to the joint body 1.

In the bite type pipe joint according to the fourth embodiment, the protecting cover 35 prevents the outer surface of the ferrule 3 from being scratched. Further, since the internal thread cylinder portion 56 of the coupling member 2 which is fastened to the joint body 1 is located inside the protecting cover 35, it is extremely difficult to loosen the screwed part of the joint body 1 and the coupling member 2.

### (Fifth Embodiment)

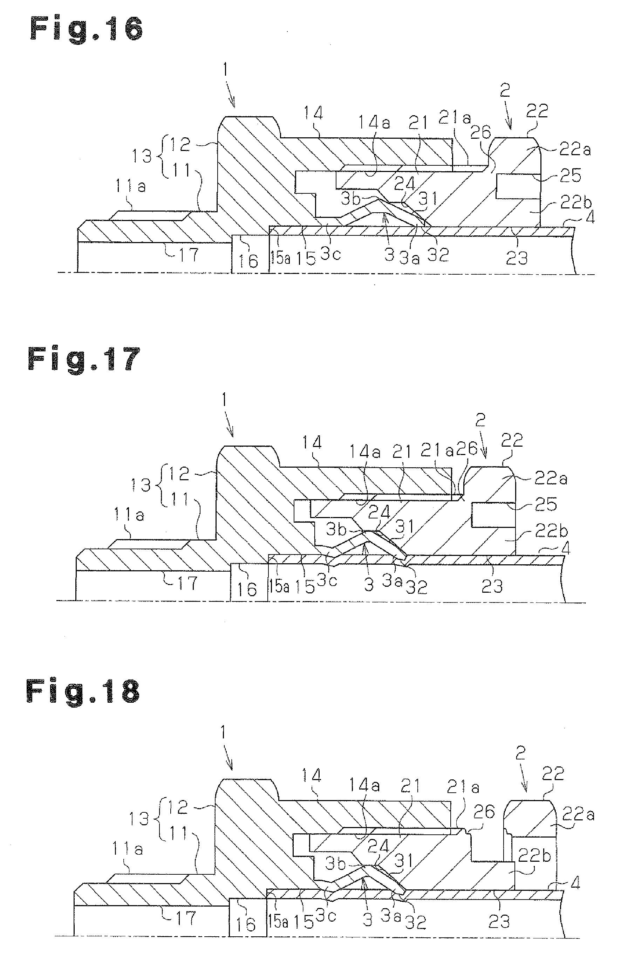

Next, a fifth embodiment of the present invention will be described with reference to Figs. 16 to 18. The fifth embodiment is different from the first embodiment in that the ferrule 3 is configured not to be separated from the joint body 1 when the coupling member 2 is fastened to the joint body 1. In the fifth embodiment, the ferrule 3 is directly connected to the base portion 13 at the proximal part 3c, as illustrated in Fig. 16. The ferrule 3 remains connected to the base portion 13 after the outer annular part 22a of the holding portion 22 is separated from the external thread portion 21 as illustrated in Fig. 18 as well as immediately before the fastening of the coupling member 2 is completed as illustrated in Fig. 17.

### (Sixth Embodiment)

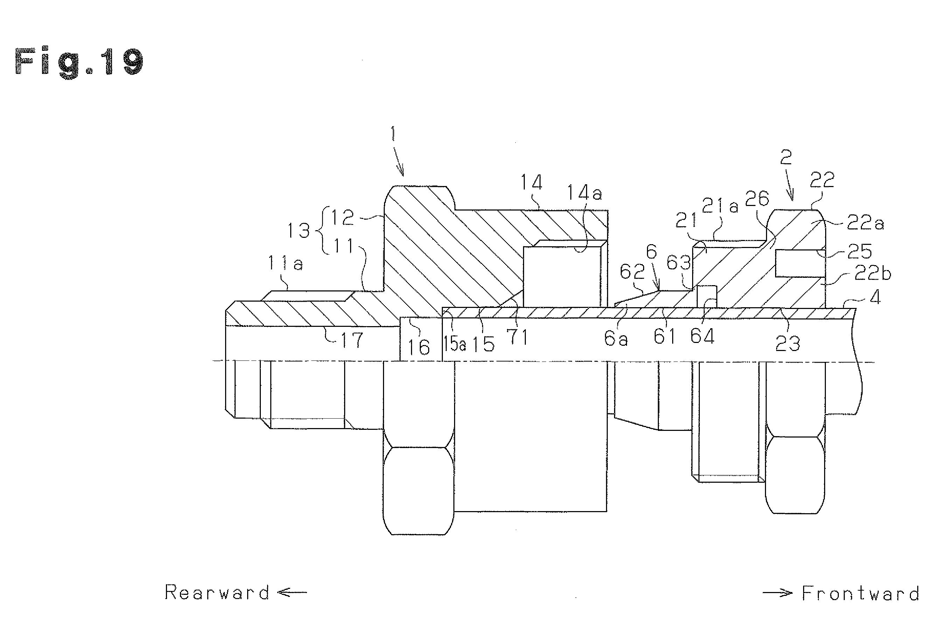

Next, a sixth embodiment of the present invention will be described with reference to Figs. 19 to 23. The sixth embodiment is different from the first embodiment mainly in that a cam surface 71 is formed at the joint body 1 in place of the ferrule 3 and a ferrule 6 is formed at the coupling member 2 in place of the cam surface 24, as illustrated in Fig. 19.

In the sixth embodiment, the cam surface 71 of the joint body 1 is positioned around the end part of the pipe connecting port 15 that is closer to the coupling member 2. The cam surface 71 is a conical surface of which the diameter increases toward the front side. The angle of the cam surface 71 in relation to the center axis of the joint body 1 (namely, the tilt angle of the cam surface 71) is slightly larger than the angle of the tapered surface 62 of the ferrule 6 discussed below in relation to the center axis of the coupling member 2 (namely, the tilt angle of the tapered surface 62). For example, the tilt angle of the cam surface 71 is set at a range of about 15 to 35 degrees and the tilt angle of the tapered surface 62 is set at a range of about 10 to 25 degrees.

As illustrated in Fig. 19, the external thread portion 21 of the coupling member 2 is compact since the length in the axial direction is shorter than that of the first embodiment. The ferrule 6 of the coupling member 2 is connected to the end part of the external thread portion 21 that is closer to the joint body 1 with a thin-walled portion 63 and is formed integrally with the external thread portion 21. A pressing surface 64 which presses the proximal part of the ferrule 6 is formed at the external thread portion 21 so as to be positioned frontward of the ferrule 6.

The ferrule 6 has a conventionally known general structure. Specifically, when the distal part 6a of the ferrule 6 receives pressure from the cam surface 71, the ferrule 6 is deformed so that the distal part a bites into the surface of a pipe 4. Accordingly, the boundary between the pipe 4 and the ferrule 6 is sealed and the distal end of the pipe 4 is supported inside the pipe joint. The ferrule 6 has a center hole 61 through which the pipe 4 inserted into the joint body 1 passes. The diameter of the center hole 61 is constant and is the same as the diameter of the pipe through hole 23 of the coupling member 2. The proximal part of the ferrule 6 is shaped like a cylinder. The distal part 6a of the ferrule 6 is shaped substantially like a truncated cone. Therefore, the outer circumferential surface of the distal part 6a is the tapered surface 62. As described above, the tilt angle of the tapered surface 62 is slightly smaller than the tilt angle of the cam surface 71.

The ferrule 6 structured as described above is moved in the axial direction along with the coupling member 2. When the coupling member 2 is further fastened to the joint body 1 after the distal part 3a of the ferrule 3 contacts the cam surface 71, the cam surface 71 exerts force in the axial direction against the thin-walled portion 63. As a result, the thin-walled portion 63 is broken after a while and the ferrule 6 is separated from the external thread portion 21.

A pipe connecting method with the bite type pipe joint according to the sixth embodiment as structured above will be described. The differences from the first embodiment will mainly be discussed below.

At the time of connecting the pipe 4 to the bite type pipe joint according to the sixth embodiment, first, the pipe 4 is inserted into the pipe through hole 23 of the coupling member 2 and the center hole 61 of the ferrule 6 so that the coupling member 2 is arranged around the pipe 4. Then, the distal end of the pipe 4 is inserted into the pipe connecting port 15 and the distal surface of the pipe 4 contacts the stepped portion 15a. Fig. 19 illustrates a state of that time. Then, the coupling member 2 is fastened to the joint body 1 by screwing the external thread 21a of the coupling member 2 with the internal thread 14a of the joint body 1. The ferrule 6 can be fastened by hand without using a fastening tool until the ferrule 6 contacts the cam surface 71 of the coupling member 2, but whereafter fastened using a fastening tool.

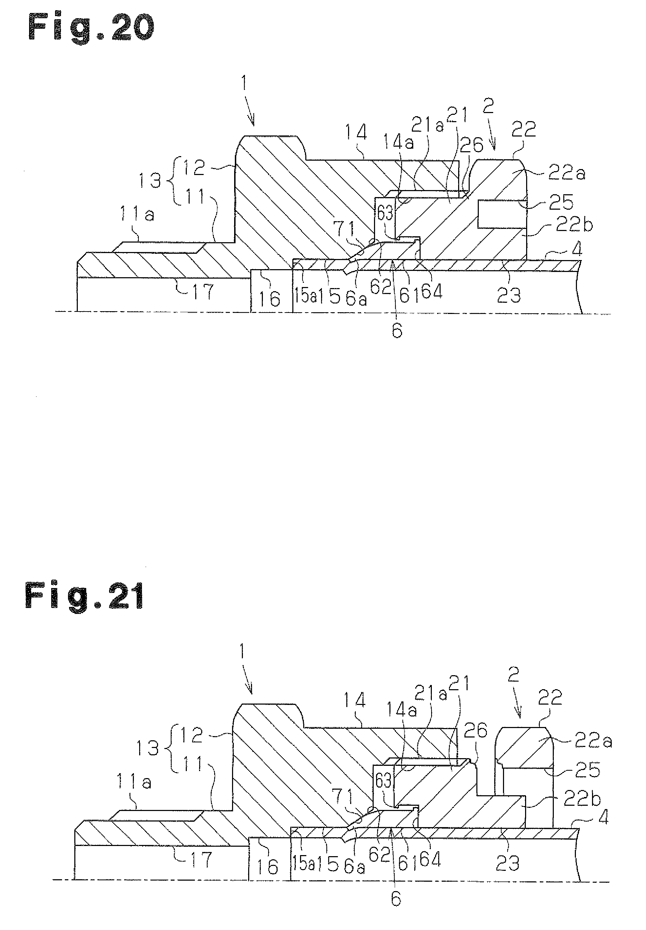

In the above-mentioned process of fastening the coupling member 2 to the joint body 1, the thin-walled portion 63 receives force in the axial direction from the cam surface 71. As a result, the thin-walled portion 63 is broken. As illustrated in Fig. 20, the ferrule 6 separated from the external thread portion 21 due to breakage of the thin-walled portion 63 is pressed by the pressing surface 64 so that the distal part 6a of the ferrule 6 is pressed against the cam surface 71. Consequently, the ferrule 6 is deformed so that the distal part 6a bites into the surface of the pipe 4. This operation seals the boundary between the tapered surface 62 of the ferrule 6 and the cam surface 71 and the boundary between the distal part 6a of the ferrule 6 and the pipe 4. Since the distal part 6a of the ferrule 6 bites into the surface of the pipe 4, the pipe 4 is securely held by the pipe joint. When the biting by the distal part 6a of the ferrule 6 to the surface of the pipe 4 progresses to a some extent, rotation torque required for coupling the coupling member 2 reaches a predetermined value so that the fastening of the coupling member 2 is completed. At that time, pipe connecting elements such as the external thread 21a of the coupling member 2 or the ferrule 6 are located inside the joint body 1. Only the holding portion 22 is located outside the joint body 1. Further, when the rotation torque reaches the predetermined value, the connecting portion 26 is broken by stress acting on the connecting portion 26 of the coupling member 2. As a result, as illustrated in Fig. 21, the outer annular part 22a including the holding surfaces is separated from the external thread portion 21. Therefore, after the pipe 4 has been connected to the bite type pipe joint, the coupling member 2 cannot be handled by using a general fastening tool.

The bite type pipe joint according to the sixth embodiment structured as described above has following advantages.

When the rotation torque required for fastening the coupling member 2 to the joint body 1 reaches the predetermined value, the fastening of the coupling member 2 is completed and the outer annular part 22a including the holding surfaces of the holding portion 22 is separated from the external thread portion 21. Therefore, once the pipe 4 is connected to the bite type pipe joint, it is impossible to handle the coupling member 2 by using a general fastening tool. Accordingly, no one can easily loosen the screwed part of the pipe joint and remove the pipe 4 thereafter. This makes it possible to prevent improper leakage and discharge of refrigerant gas such as chlorofluorocarbon gas into the atmosphere. Further, in the case where the pipe 4 needs to be removed, such removal has to be performed by a specialist who complies with chlorofluorocarbon regulations. In this manner, the bite type pipe joint according to the sixth embodiment contributes to reducing the amount of chlorofluorocarbon discharged into the atmosphere.

By forming the slit 25 at the holding portion 22 of the coupling member 2, the outer annular part 22a of the holding portion 22 is connected to the external thread portion 21 with the thin-walled connecting portion 26. Therefore, adjusting the thickness of the connecting portion 26 easily enables the connecting portion 26 to be broken at an appropriate rotation torque value.

Since the ferrule 6 is formed integrally with the coupling member 2, the time and effort for controlling the ferrule 6 separately from the coupling member 2 are eliminated. Further, the ferrule 6 is separated from the coupling member 2 in the process of fastening the coupling member 2 to the joint body 1. This makes is possible to prevent the decrease in the sealing performance caused by unnecessary scratches which are made during the coupling by the ferrule 6 onto the surface of the pipe 4 and the cam surface 71.

In addition, in a refrigeration apparatus and a heat pump water heating apparatus which use the bite type pipe joint according to the sixth embodiment at a refrigerant circuit thereof, improper leakage of refrigerant from the pipe joint is prevented, and the reliability of these apparatuses is thereby improved.

### (Seventh Embodiment)

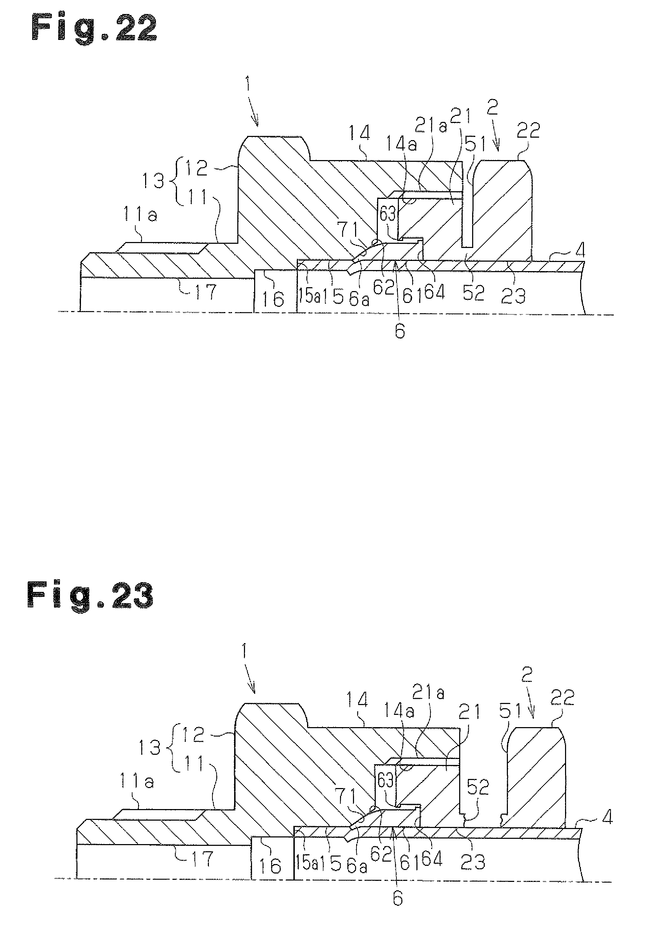

Next, a seventh embodiment of the present invention will be described with reference to Figs. 22 and 23. In the seventh embodiment, the entire holding portion 22, which is located outside the joint body 1 when the coupling member 2 has been fastened to the joint body 1, is configured to be separated from the remaining part of the coupling member 2 as in the second embodiment. The seventh embodiment differs in this respect from the sixth embodiment.

As illustrated in Fig. 22, in the seventh embodiment, a slit 51 is formed at the outer circumference portion of the coupling member 2 at the position substantially aligned with the front end surface of the internal thread cylinder portion 14 in a state where the coupling member 2 has been fastened to the joint body 1. The coupling member 2 is partitioned into the external thread portion 21 and the holding portion 22 by the slit 51. Since the slit 51 is formed, the holding portion 22 is connected to the external thread portion 21 with a thin-walled connecting portion 52. When the rotation torque required for fastening the coupling member 2 to the joint body 1 reaches a predetermined value, that is, when the fastening of the coupling member 2 is completed, the connecting portion 52 is broken and the holding portion 22 is separated from the external thread portion 21, as illustrated in Fig. 23. As described above, in the seventh embodiment, the slit 51 is formed in place of the slit 25 in the sixth embodiment. The rest of the configuration is the same as that of the sixth embodiment.

With regard to the bite type pipe joint according to the seventh embodiment, the entire part of the coupling member 2 which is located outside the joint body 1, that is, the entire holding portion 22, is separated from the external thread portion 21 when the rotation torque required for the coupling reaches the predetermined value. Therefore, it is extremely difficult to loosen the screwed part of the joint body 1 and the coupling member 2.

Further, adjusting the thickness of the connecting portion 52 easily enables the connecting portion 52 to be broken at an appropriate rotation torque value.

### (Eighth Embodiment)

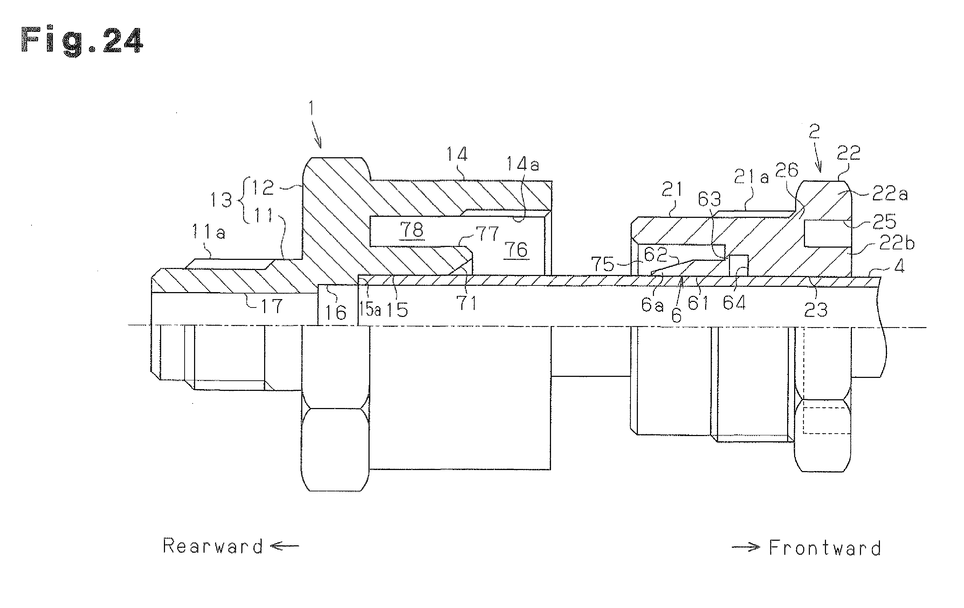

Next, an eighth embodiment of the present invention will be described with reference to Figs. 24 to 26. First, the eighth embodiment is different from the sixth embodiment in that the ferrule 6 is arranged inside the external thread portion 21, as illustrated in Fig. 24. In the sixth embodiment, the ferrule 6 which greatly affects sealing performance is exposed outside the coupling member 2 without any protection by the external thread portion 21. Therefore, the outer surface of the ferrule 6 is vulnerable to scratches before being used for connecting the pipe 4. In order to prevent the above, in a bite type pipe joint according to the eighth embodiment, the external thread portion 21 of the coupling member 2 is extended in the axial direction than that in the sixth embodiment, as illustrated in Fig. 24. Accordingly, the ferrule 6 is arranged inside the external thread portion 21, that is, in a hollow portion 75 which is defined by the inner circumferential surface of the external thread portion 21.

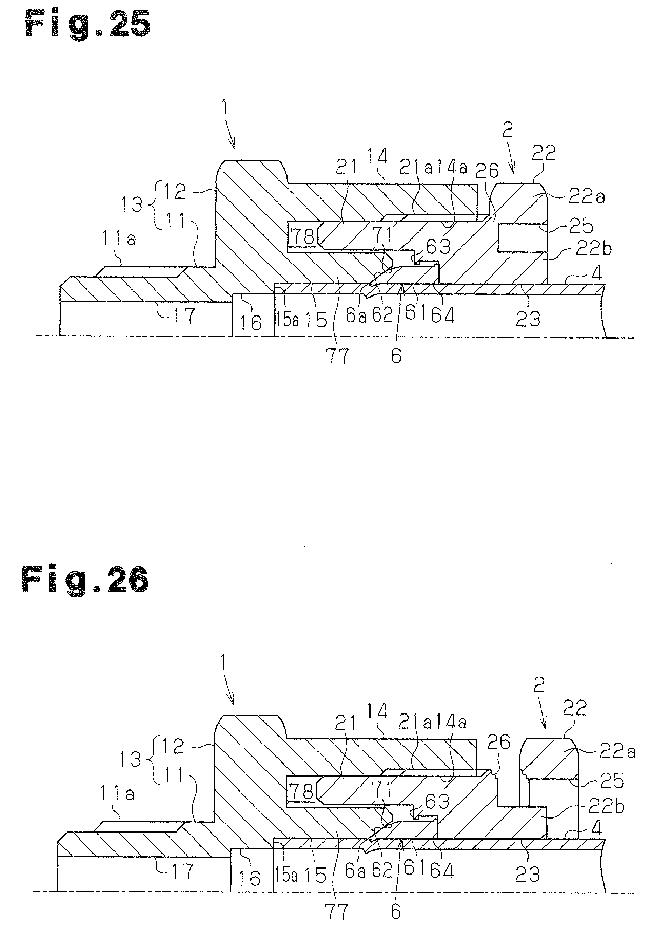

Further, the eighth embodiment is also different from the sixth embodiment in that a shaft portion 77 extending from the base portion 13 is arranged in a hollow portion 76 which is defined by the inner circumferential surface of the internal thread cylinder portion 14 of the joint body 1. A pipe connecting port 15 is formed at the axial part of the shaft portion 77. A cam surface 71 is arranged around the front end of the pipe connecting port 15. A hollow portion 78 which is defined by the outer circumferential surface of the shaft portion 77 and the inner circumferential surface of the internal thread cylinder portion 14 allows the insertion of the distal end of the external thread portion 21 of the coupling member 2. As illustrated in Figs. 25 and 26, the ferrule 6 and the external thread portion 21 are located inside the internal thread cylinder portion 14 of the joint body 1 and the holding portion 22 is located outside the joint body 1 when the coupling member 2 has been fastened to the joint body 1.

With regard to the bite type pipe joint according to the eighth embodiment, the external thread portion 21 prevents the outer surface of the ferrule 6 from being scratched. Further, since the outer annular part 22a of the holding portion 22 is separated from the external thread portion 21 when the coupling member 2 has been fastened to the joint body 1, it is difficult to loosen the screwed part of the joint body 1 and the coupling member 2 by using a genera fastening tool once the pipe 4 is connected to the pipe joint.

### (Ninth Embodiment)

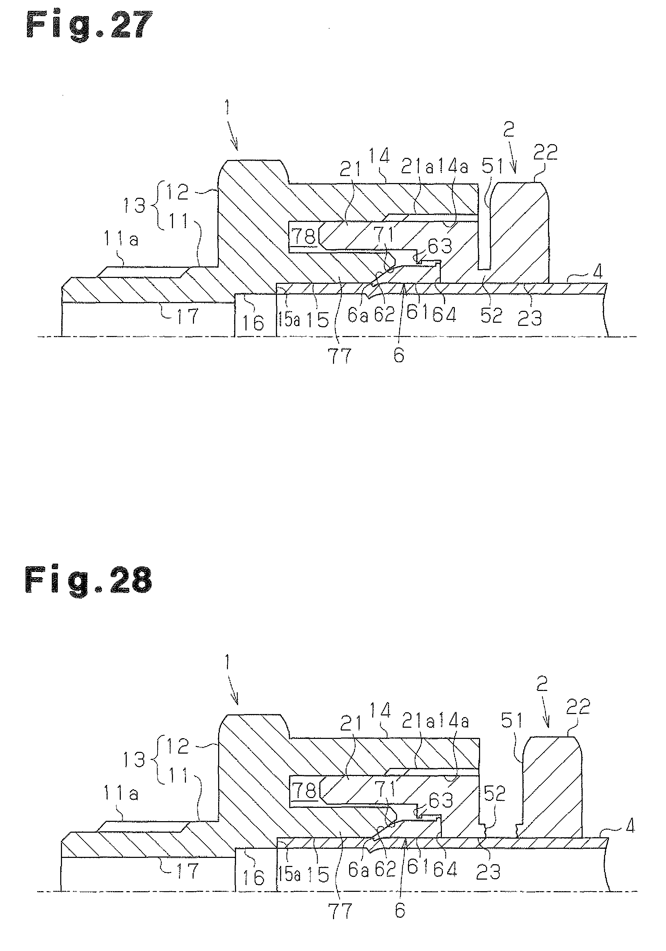

Next, a ninth embodiment of the present invention will be described with reference to Figs. 27 and 28. In the ninth embodiment, the entire holding portion 22, which is located outside the joint body 1 when the coupling member 2 has been fastened to the joint body 1, is configured to be separated from the remaining part of the coupling member 2 as in the second embodiment. The ninth embodiment differs in this respect from the eighth embodiment.

As illustrated in Fig. 27, in the ninth embodiment, a slit 51 is formed at the outer circumference of the coupling member 2 at a position substantially aligned with the front end surface of the internal thread cylinder portion 14 in a state where the coupling member 2 has been fastened to the joint body 1. The coupling member 2 is partitioned into the external thread portion 21 and the holding portion 22 by the slit 51. Since the slit 51 is formed, the holding portion 22 is connected to the external thread portion 21 with a thin-walled connecting portion 52. When the rotation torque required for fastening the coupling member 2 to the joint body 1 reaches a predetermined value, that is, when the fastening of the coupling member 2 is completed, the connecting portion 52 is broken and the holding portion 22 is separated from the external thread portion 21, as illustrated in Fig. 28. As described above, in the ninth embodiment, the slit 51 is formed in place of the slit 25 of the eighth embodiment. The rest of the configuration is the same as that of the eighth embodiment.

With regard to the bite type pipe joint according to the ninth embodiment, the entire part of the coupling member 2 located outside the joint body 1, that is, the entire holding portion 22, is separated from the external thread portion 21 when the rotation torque required for the coupling reaches the predetermined value. Therefore, it is extremely difficult to loosen the screwed part of the joint body 1 and the coupling member 2.

Further, adjusting the thickness of the connecting portion 52 easily enables the connecting portion 52 to be broken at an appropriate rotation torque value.

### (Tenth Embodiment)

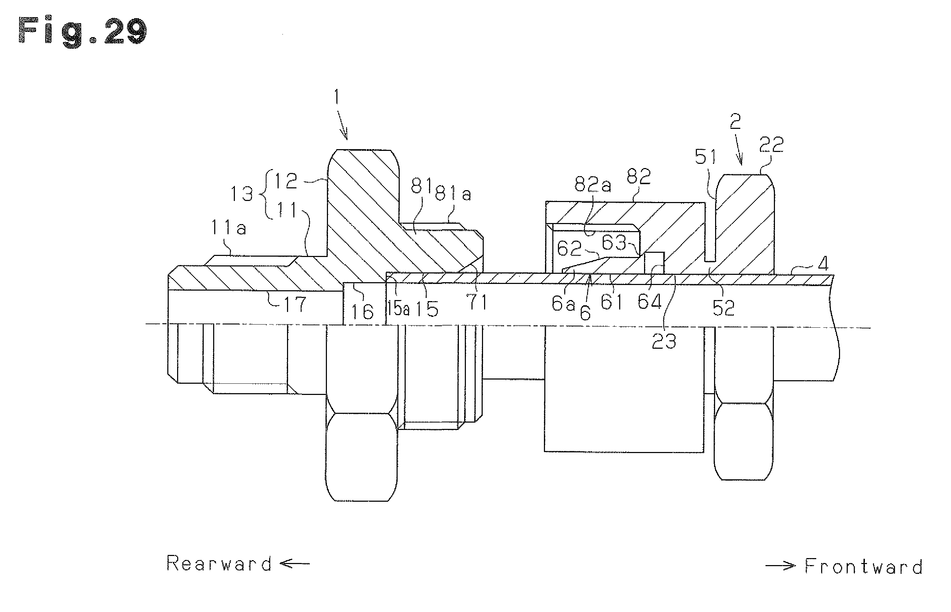

Next, a tenth embodiment of the present invention will be described with reference to Figs. 29 to 31. As illustrated in Fig. 29, the tenth embodiment differs from the ninth embodiment mainly in that an external thread portion 81 is formed at the joint body 1 in place of the internal thread cylinder portion 14 and the shaft portion 77, and an internal thread cylinder portion 82 is formed at the coupling member 2 in place of the external thread portion 21.

An external thread 81a is formed on the outer circumferential surface of the external thread portion 81 of the joint body 1 as a screw portion which is screwed to the screw portion of the coupling member 2. A cam surface 71 has a structure that is similar to that of the ninth embodiment except for being formed at the end part of the external thread portion 81 that is closer to the coupling member 2. An internal thread 82a is formed on the inner circumferential surface of the internal thread cylinder portion 82 of the coupling member 2 as a screw portion which is screwed to the screw portion of the joint body 1. The outer circumferential surface of the internal thread cylinder portion 82 is a cylindrical surface. A ferrule 6 is connected to the internal thread cylinder portion 82 with a thin-walled portion 63 and formed integrally with the internal thread cylinder portion 82. A pressing surface 64 which presses the proximal part of the ferrule 6 is formed at the external thread portion 21 so as to be positioned frontward of the ferrule 6. A slit 51 similar to that in the ninth embodiment is formed at the outer circumference of the coupling member 2. The coupling member 2 is partitioned into the internal thread cylinder portion 82 and the holding portion 22 by the slit 51. The rest of the configuration is the same as that of the ninth embodiment.

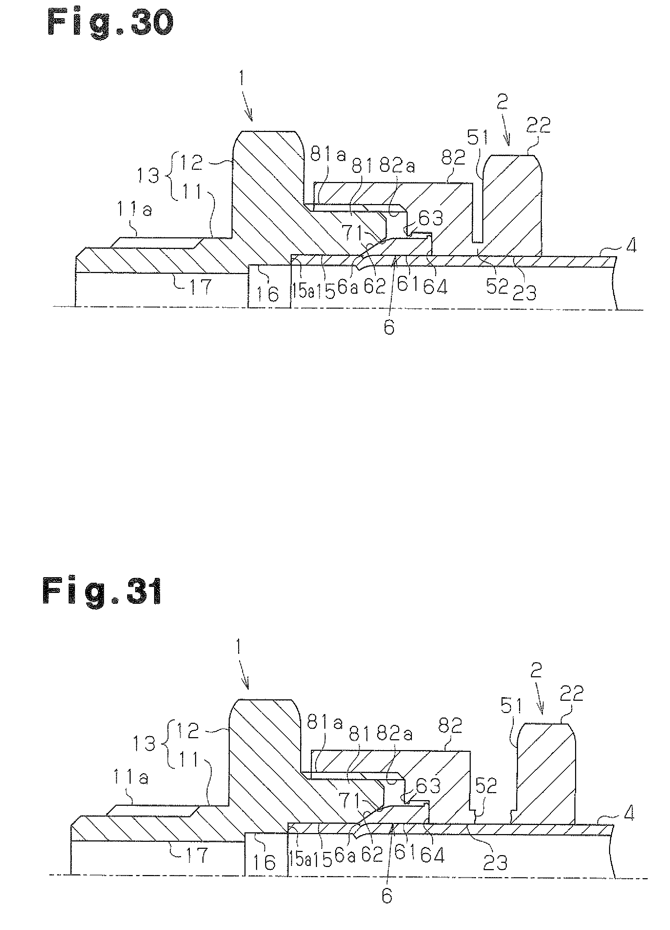

With regard to the bite type pipe joint according to the tenth embodiment, the coupling member 2 is fastened to the joint body 1 by screwing the internal thread 82a of the coupling member 2 with the external thread 81a of the joint body 1, as illustrated in Fig. 30. Then, when the fastening is completed, the holding portion 22 is separated from the internal thread cylinder portion 82, as illustrated in Fig. 31. Since the internal thread cylinder portion 82 has no holding surfaces, it is difficult to remove the coupling member 2 from the joint body 1 by operating the coupling member 2 after the holding portion 22 is separated from the internal thread cylinder portion 82.

### (Eleventh Embodiment)

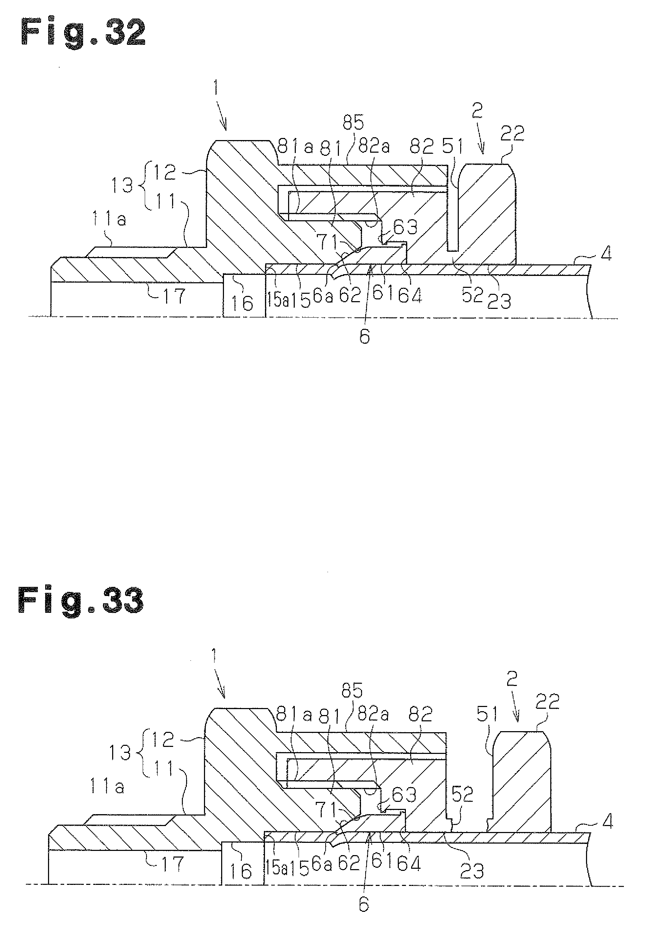

Next, an eleventh embodiment of the present invention will be described with reference to Figs. 32 and 33. A bite type pipe joint according to the eleventh embodiment differs from the bite type pipe joint according to the tenth embodiment in having an outer circumference cover 85.

In the tenth embodiment, the internal thread cylinder portion 82 of the coupling member 2 is exposed without being covered by the joint body 1 in a state where the coupling member 2 has been fastened to the joint body 1. Also in this case, since the outer circumferential surface of the internal thread cylinder portion 82 is a cylindrical surface, it is difficult to handle the coupling member 2 after being fastened to the joint body 1 by using a general fastening tool. In the bite type pipe joint according to the eleventh embodiment, however, in order to make such handling even more difficult, the cylindrical outer circumference cover 85 extending frontward from the nut portion 12 is provided, as illustrated in Fig. 32. The distal end of the outer circumference cover 85 is positioned further frontward than the distal end of the external thread portion 81. The distal end of the outer circumference cover 85 forms the front end of the joint body 1. When the coupling member 2 has been fastened to the joint body 1, the pipe connecting elements such as the internal thread cylinder portion 82 and the ferrule 6 of the coupling member 2 are arranged inside the outer circumference cover 85. The slit 51 of the coupling member 2 is positioned to be substantially aligned with the front end surface of the joint body 1, that is, the distal surface of the outer circumference cover 85 when the coupling member 2 has been fastened to the joint body 1.

With regard to the bite type pipe joint according to the eleventh embodiment, when the coupling member 2 has been fastened to the joint body 1, almost the entire coupling member 2 except the holding portion 22 is located inside the outer circumference cover 85. Therefore, as illustrated in Fig. 33, it is extremely difficult to loosen the screwed part of the joint body 1 and the coupling member 2 by handling the coupling member 2 after the holding portion 22 is separated from the internal thread cylinder portion 82 due to breakage of the connecting portion 52.

### (Twelfth Embodiment)

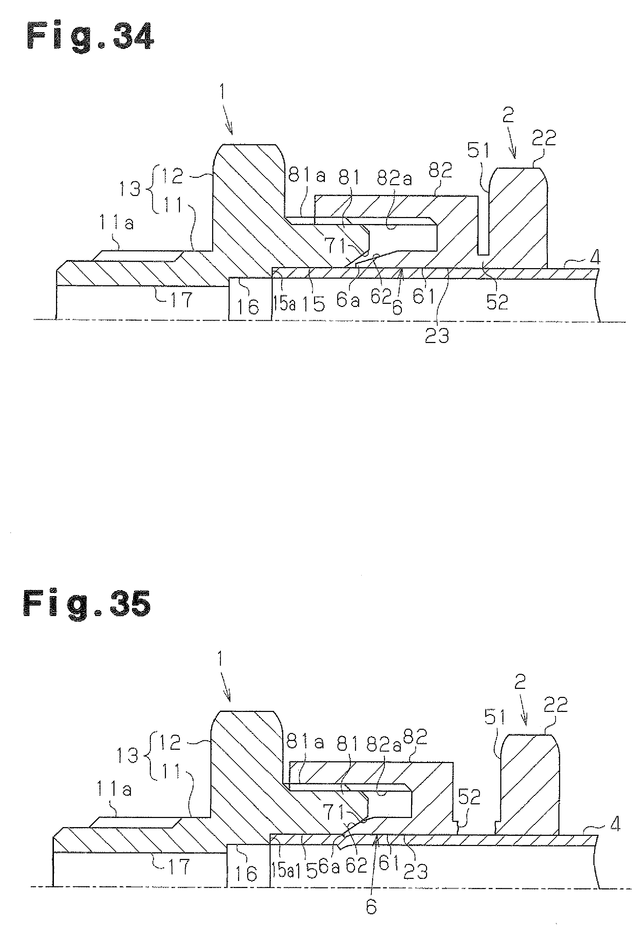

Next, a twelfth embodiment of the present invention will be described with reference to Figs. 34 and 35. The twelfth embodiment differs from the tenth embodiment in that the ferrule 6 is not separated from the joint body 1 when the coupling member 2 is fastened to the joint body 1. Specifically, in the twelfth embodiment, the ferrule 6 is directly connected to the internal thread cylinder portion 82 at the proximal part thereof without a thin-walled portion 63, as illustrated in Fig. 34. Therefore, the ferrule 6 remains connected to the internal thread cylinder portion 82 after the holding portion 22 is separated from the internal thread cylinder portion 82, as illustrated in Fig. 35.

### (Thirteenth Embodiment)

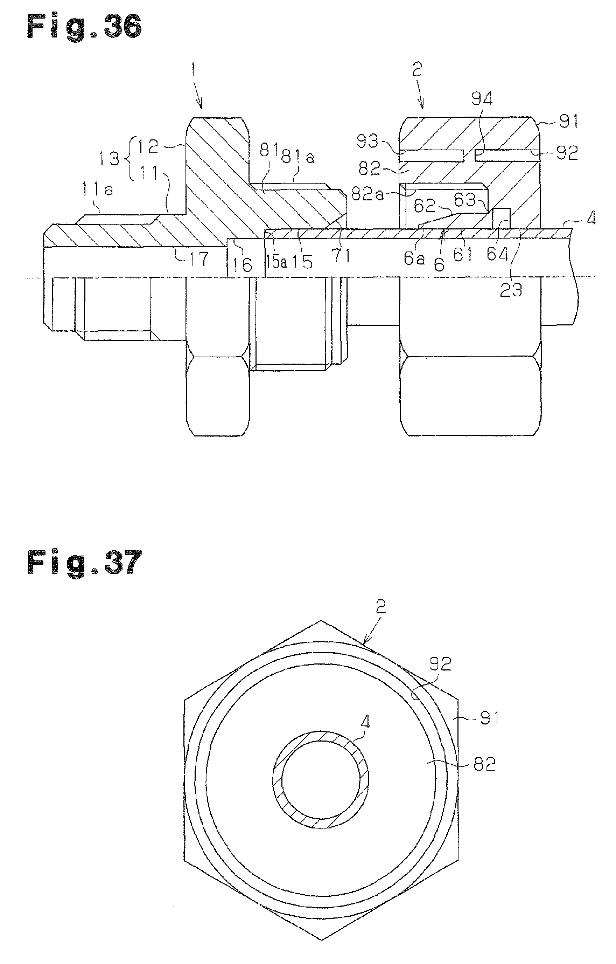

Next, a thirteenth embodiment of the present invention will be described with reference to Figs. 36 to 39. The thirteenth embodiment differs from the tenth embodiment in that a holding portion 91 of which the configuration is different from that of the holding portion 22 is used in place of the holding portion 22. As illustrated in Figs. 36 and 37, the holding portion 91 has an external form like a hexagonal nut and is arranged at the outer circumference of an internal thread cylinder portion 82. The holding portion 91 is connected to the internal thread cylinder portion 82 with a thin-walled connecting portion 94 and formed integrally with the internal thread cylinder portion 82. In other words, slits 92, 93 formed at the front end surface and the rear end surface of the coupling member 2 partition the coupling member 2 into the internal thread cylinder portion 82 and the holding portion 91 which are connected each other with the connecting portion 94.

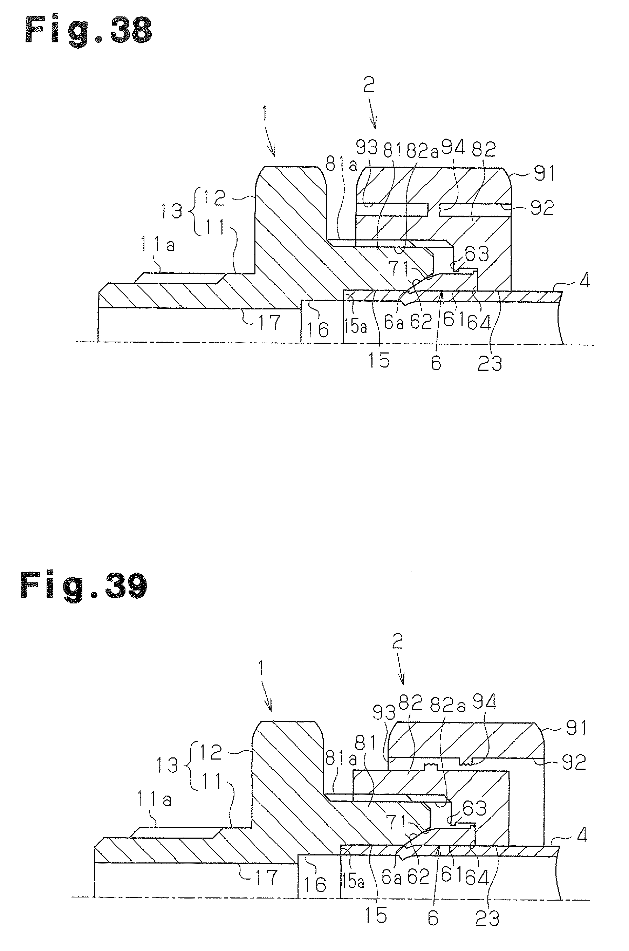

As illustrated in Figs. 38 and 39, when the rotation torque required for fastening the coupling member 2 to the joint body 1 reaches a predetermined value, that is, when the fastening of the coupling member 2 is completed, the connecting portion 94 is broken and the holding portion 91 is separated from the internal thread cylinder portion 82. As described above, in the thirteenth embodiment, the holding portion 91 of which the configuration is different from that of the holding portion 22 is used in place of the holding portion 22. The rest of the configuration is the same as that of the tenth embodiment.

With regard to the bite type pipe joint according to the thirteenth embodiment, since the outer circumferential surface of the internal thread cylinder portion 82 is a cylindrical surface, it is difficult to loosen the screwed part of the joint body 1 and the coupling member 2 by handling the coupling member 2 with a general fastening tool after being fastened to the joint body 1 so that the holding portion 91 is separated from the internal thread cylinder portion 82.

Further, adjusting the thickness of the connecting portion 94 easily enables the connecting portion 52 to be broken at an appropriate rotation torque value.

### (Fourteenth Embodiment)

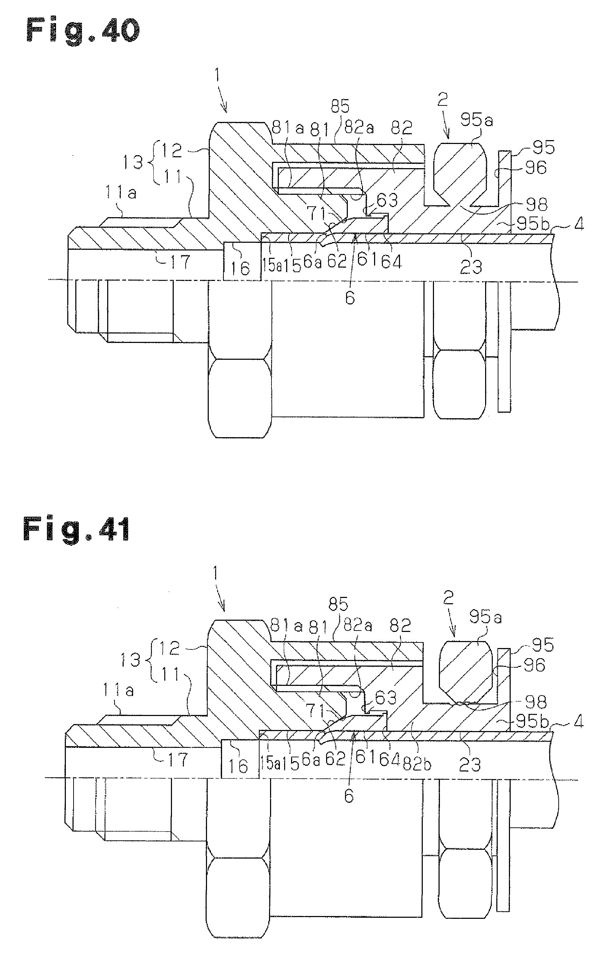

Next, a fourteenth embodiment of the present invention will be described with reference to Figs. 40 and 41. The fourteenth embodiment differs from the eleventh embodiment in that a holding portion 95 having a different structure from that of the holding portion 22 is used in place of the holding portion 22.

As illustrated in Fig. 40, the holding portion 95 is formed at the front end of the coupling member 2. More specifically, the holding portion 95 includes an outer annular part 95a arranged inside a groove 96 formed at the outer circumference of the front end of the coupling member 2 and an inner annular part 95b connected to the outer annular part 95a with a connecting portion 98. The connecting portion 98 is smaller in dimension than that of the outer annular part 95a in the axial direction of the pipe joint. The outer annular part 95a is shaped like a hexagonal nut and can be held with a fastening tool. When the coupling member 2 has been fastened to the joint body 1, the holding portion 95 is located outside the joint body 1. When the rotation torque required for fastening the coupling member 2 to the joint body 1 reaches a predetermined value, that is, when the fastening of the coupling member 2 is completed, the connecting portion 98 is broken and the outer annular part 95a of the holding portion 95 is separated from the inner annular part 95b, as illustrated in Fig. 41. The outer annular part 95a after being separated from the inner annular part 95b due to breakage of the connecting portion 98 remains inside the groove 96. In other words, the outer annular part 95a after separation remains around the inner annular part 95b.

With regard to the bite type pipe joint according to the fourteenth embodiment, it is difficult to loosen the screwed part of the joint body 1 and the coupling member 2 by using a general fastening tool once a pipe 4 is connected to the pipe joint because of interference by the outer annular part 95a which remains inside the groove 96 after being separated from the inner annular part 95b due to the breakage of the connecting portion 98.

### (Fifteenth Embodiment)

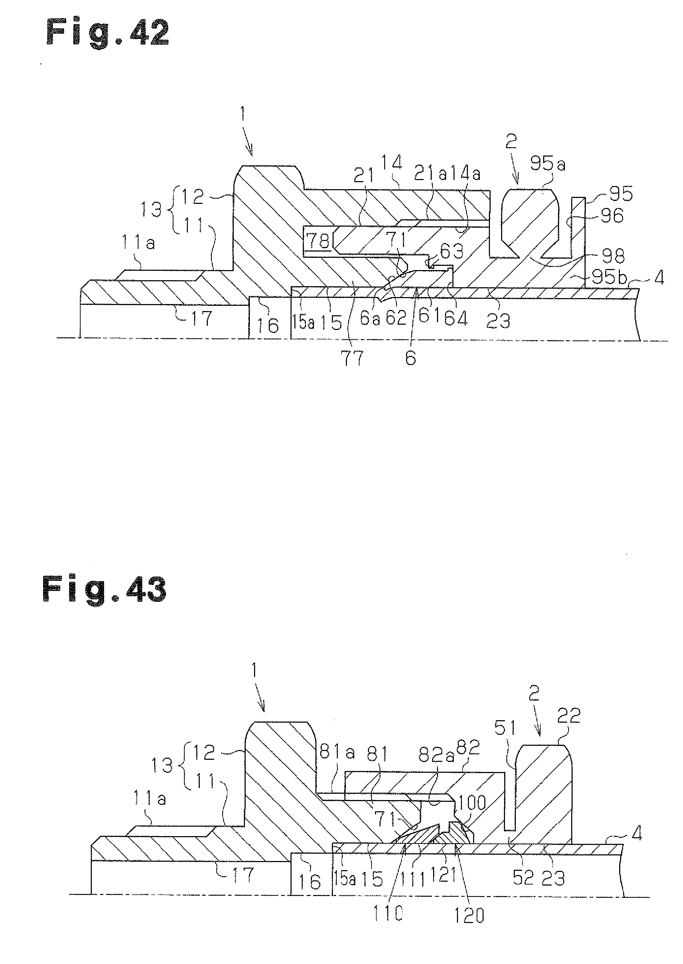

Next, a fifteenth embodiment of the present invention will be described with reference to Fig. 42. The fifteenth embodiment differs from the eighth embodiment in that the holding portion 95 in the fourteenth embodiment is used in place of the holding portion 22. The rest of the configuration is the same as that of the eight embodiment. Therefore, in the fifteenth embodiment, the advantages similar to the fourteenth embodiment are obtained.

### (Sixteenth Embodiment)

Next, a sixteenth embodiment of the present invention will be described with reference to Figs. 43 to 45. The sixteenth embodiment differs from the tenth embodiment in that a front ferrule 110 and a back ferrule 120 are used in place of the ferrule 6.

As illustrated in Fig. 43, the front ferrule 110 and the back ferrule 120 are not connected to the joint body 1 or the coupling member 2 and are formed separately from the joint body 1 and the coupling member 2. The front ferrule 110 positioned at the left side in Fig. 43 has a center hole 111 at the axial center part thereof. The back ferrule 120 positioned at the right side in Fig. 43 has a center hole 121 at the axial center part thereof. A truncated coney-shaped pressing surface 100 for pressing the front ferrule 110 and the back ferrule 120 is formed inside the internal thread cylinder portion 82 of the coupling member 2.

The distal portion (the left end portion in Fig. 43) of the back ferrule 120 reduces the thickness thereof toward the distal end of the back ferrule 120. The outer circumferential surface at the distal portion of the back ferrule 120 is a first tapered surface 122 of which the diameter decrease toward the distal end of the back ferrule 120. The inner circumferential surface at the proximal portion (the right end portion in Fig. 43) of the front ferrule 110 is a second tapered surface 112 of which the diameter increases toward the proximal end of the front ferrule 110. The first tapered surface 122 of the back ferrule 120 can contact the second tapered surface 112 of the front ferrule 110. The inner circumferential surface at the distal portion (the left end portion) of the front ferrule 110 is a third tapered surface 113 of which the diameter decreases toward the distal end of the front ferrule 110.

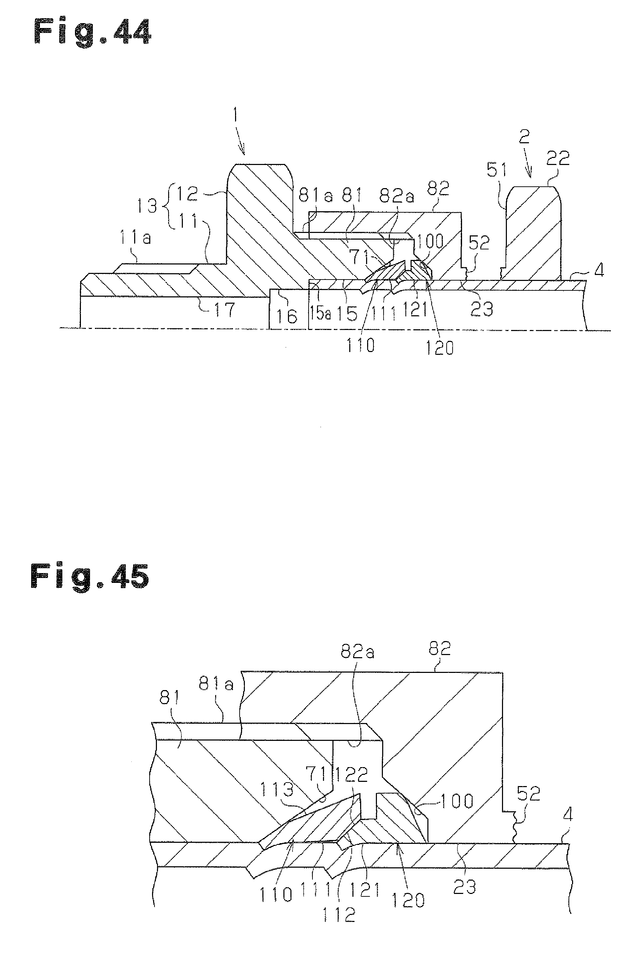

With regard to the bite type pipe joint according to the sixteenth embodiment, when the coupling member 2 is further fastened to the joint body 1 from the state where the distal end of the front ferrule 110 contacts the cam surface 71 of the joint body 1, the back ferrule 120 is pressed by the pressing surface 100 of the coupling member 2, as illustrated in Fig. 45. Consequently, the distal end of the back ferrule 120 bites into the surface of the pipe 4. At the same time, the second tapered surface 112 of the front ferrule 110 is pressed by the first tapered surface 122 of the back ferrule 120. Accordingly, the distal portion of the front ferrule 110 is pressed toward the cam surface 71 of the joint body 1. The front ferrule 110 is deformed so that the distal end thereof bites into the surface of the pipe 4. Then, when the rotation torque required for fastening the coupling member 2 to the joint body 1 reaches a predetermined value, that is, when the fastening of the coupling member 2 is completed, the connecting portion 52 is broken and the holding portion 22 is separated from the internal thread cylinder portion 82, as illustrated in Fig. 44.

Accordingly, since each of the distal ends of the front ferrule 110 and the back ferrule 120 bite into the surface of the pipe 4, the pipe 4 is securely held by the bite type pipe joint. Since the third tapered surface 113 of the front ferrule 110 is pressed against the cam surface 71, the boundary between the front ferrule 110 and the cam surface 71 is sealed. Further, since the distal end of the front ferrule 110 bites into the surface of the pipe 4, the boundary between the pipe 4 and the front ferrule 110 is sealed. In this manner, with the bite type pipe joint according to the sixteenth embodiment, high sealing performance is obtained. Further, the reliability of a refrigeration apparatus and a heat pump water heating apparatus which use the bite type pipe joint at a refrigerant circuit is improved.

### (Seventeenth Embodiment)

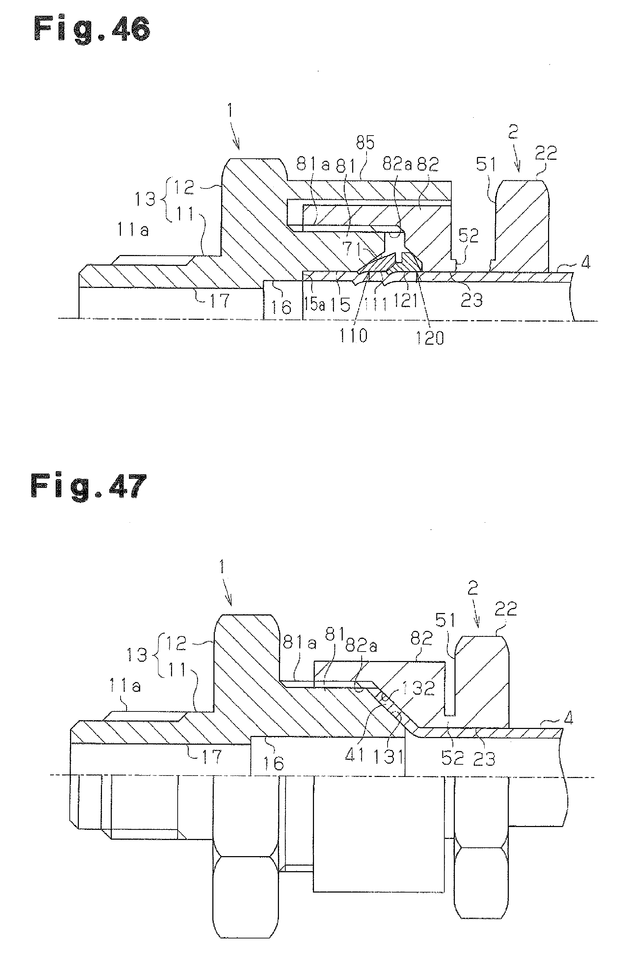

Next, a seventeenth embodiment of the present invention will be described with reference to Fig. 46. A bite type pipe joint according to the seventeenth embodiment includes an outer circumference cover 85 as in the eleventh embodiment and differs in this respect from the bite type pipe joint according to the sixteenth embodiment.

As illustrated in Fig. 46, in the bite type pipe joint according to the seventeenth embodiment, the cylindrical outer circumference cover 85 extending frontward from the nut portion 12 is provided. The distal end of the outer circumference cover 85 is positioned further frontward than the distal end of the external thread portion 81. The distal end of the outer circumference cover 85 forms the front end of the joint body 1. When the coupling member 2 has been fastened to the joint body 1, the pipe connecting elements such as the internal thread cylinder portion 82 of the coupling member 2, the front ferrule 110, or the back ferrule 120 are located inside the outer circumference cover 85. The slit 51 of the coupling member 2 is positioned to be substantially aligned with the front end surface of the joint body 1, that is, the distal surface of the outer circumference cover 85 when the coupling member 2 has been fastened to the joint body 1.

With regard to the bite type pipe joint according to the seventeenth embodiment, when the coupling member 2 has been fastened to the joint body 1, the entire coupling member 2 except the holding portion 22 is located inside the outer circumference cover 85. Therefore, it is extremely difficult to loosen the screwed part of the joint body 1 and the coupling member 2 by handling the coupling member 2 after the holding portion 22 is separated from the internal thread cylinder portion 82 due to breakage of the connecting portion 52.

### (Eighteenth Embodiment)

Next, an eighteenth embodiment of the present invention will be described with reference to Fig. 47. The eighteenth embodiment differs from the tenth embodiment in that the mechanism of connecting a pipe 4 to the pipe joint is changed from the bite type to the flared type.

As illustrated in Fig. 47, the pipe joint according to the eighteenth embodiment includes a joint body 1 and a coupling member 2. The joint body 1 is attached to an interconnecting device and a pipe 4 is inserted into the joint body 1. The coupling member 2 is arranged around the pipe 4, which is inserted into the joint body, 1 and is fastened to the joint body 1 by screwing.

The joint body 1 includes a base portion 13 and an external thread portion 81. The base portion 13 includes an attaching portion 11 which is attached to the interconnecting device such as a closing valve, a container, or a pipe, and a nut portion 12 which is held by a fastening tool when the joint body 1 and the coupling member 2 are fastened to each other. An external thread 81a as a screw portion which is screwed to a screw portion of the coupling member 2 discussed below is formed at the outer circumference of the external thread portion 81. A flare receiving surface 131 which can contact a flare portion 41 of the pipe 4 is formed at the front end of the external thread portion 81. A large diameter communicating hole 16 and a small diameter communicating hole 17 are formed at the axial part of the joint body 1 as fluid passages.

The coupling member 2 includes an internal thread cylinder portion 82 and a holing portion 22 which are integrally formed with each other. An internal thread 82a is formed on the inner circumferential surface of the internal thread cylinder portion 82 as a screw portion which is screwed to the screw portion of the joint body 1. A pipe through hole 23 is formed at the axial center part of the coupling member 2. A flare pressing surface 132 is formed inside the internal thread cylinder portion 82 of the coupling member 2. The structure of the holding portion 22 is similar to that of the tenth embodiment. Further, as in the tenth embodiment, a slit 51 is formed at the outer circumference of the coupling member 2. The coupling member 2 is partitioned into the external thread portion 21 and the holding portion 22 by the slit 51. Since the slit 51 is formed, the holding portion 22 is connected to the external thread portion 21 with a thin-walled connecting portion 52.

At the time of connecting the pipe 4 to the flared pipe joint according to the eighteenth embodiment, first, the pipe 4 is inserted into the pipe through hole 23 of the coupling member 2 so that the coupling member 2 is arranged around the pipe 4. Then, the flare portion 41 is formed at the distal end of the pipe 4. Next, the coupling member 2 is fastened to the joint body 1 while contacting the flare portion 41 to the flare receiving surface 131 of the joint body 1. As illustrated in Fig. 47, when the flare portion 41 is pinched between the flare receiving surface 131 and the flare pressing surface 132, the rotation torque required for coupling the coupling member 2 reaches a predetermined value and the fastening of the coupling member 2 is completed. As in the tenth embodiment, when the rotation torque required for coupling the coupling member 2 reaches the predetermined value, the connecting portion 52 is broken and the holding portion 22 is separated from the external thread portion 82.

According to the eighteenth embodiment, once the pipe 4 is connected to the flared pipe joint, it is impossible to handle the coupling member 2 by using a general fastening tool.

### (Nineteenth Embodiment)

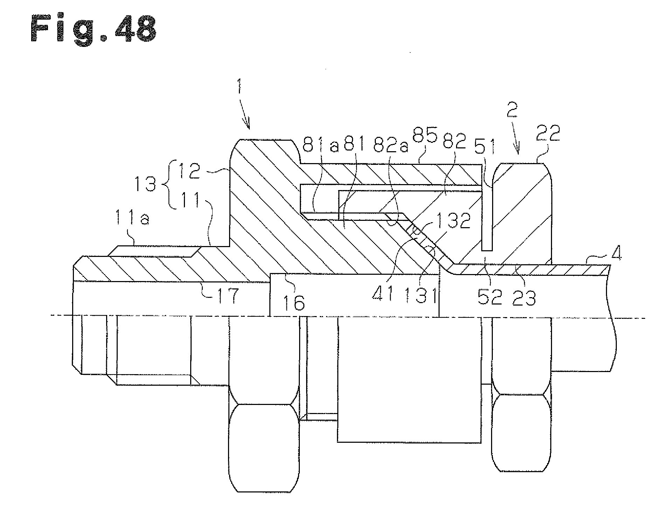

Next, a nineteenth embodiment of the present invention will be described with reference to Fig. 48. A flared pipe joint according to the nineteenth embodiment includes an outer circumference cover 85 as in the eleventh embodiment and differs in this respect from the flared pipe joint according to the eighteenth embodiment.

In the eighteenth embodiment, the internal thread cylinder portion 82 of the coupling member 2 is exposed without being covered by the joint body 1 in a state where the coupling member 2 has been fastened to the joint body 1. Also in this case, since the outer circumferential surface of the internal thread cylinder portion 82 is a cylindrical surface, it is difficult to handle the coupling member 2 after being fastened to the joint body 1 by using a general fastening tool. In the bite type pipe joint according to the nineteenth embodiment, however, in order to make such handling even more difficult, the outer circumference cover 85 which is cylindrical and extending frontward from the nut portion 12 is provided, as illustrated in Fig. 48. The distal end of the outer circumference cover 85 is arranged further frontward than the distal end of the external thread portion 81. The distal end of the outer circumference cover 85 forms the front end of the joint body 1. When the coupling member 2 has been fastened to the joint body 1, the internal thread cylinder portion 82 of the coupling member 2 is located inside the outer circumference cover 85. The slit 51 of the coupling member 2 is positioned to be substantially aligned with the front end surface of the joint body 1, that is, the distal surface of the outer circumference cover 85 when the coupling member 2 has been fastened to the joint body 1.

With regard to the flared pipe joint according to the nineteenth embodiment, when the coupling member 2 has been fastened to the joint body 1, almost the entire coupling member 2 except the holding portion 22 is located inside the outer circumference cover 85. Therefore, as in the eleventh embodiment, it is extremely difficult to loosen the screwed part of the joint body 1 and the coupling member 2 by handling the coupling member 2 after the holding portion 22 is separated from the internal thread cylinder portion 82 due to the breakage of the connecting portion 52.

### (Twentieth Embodiment)

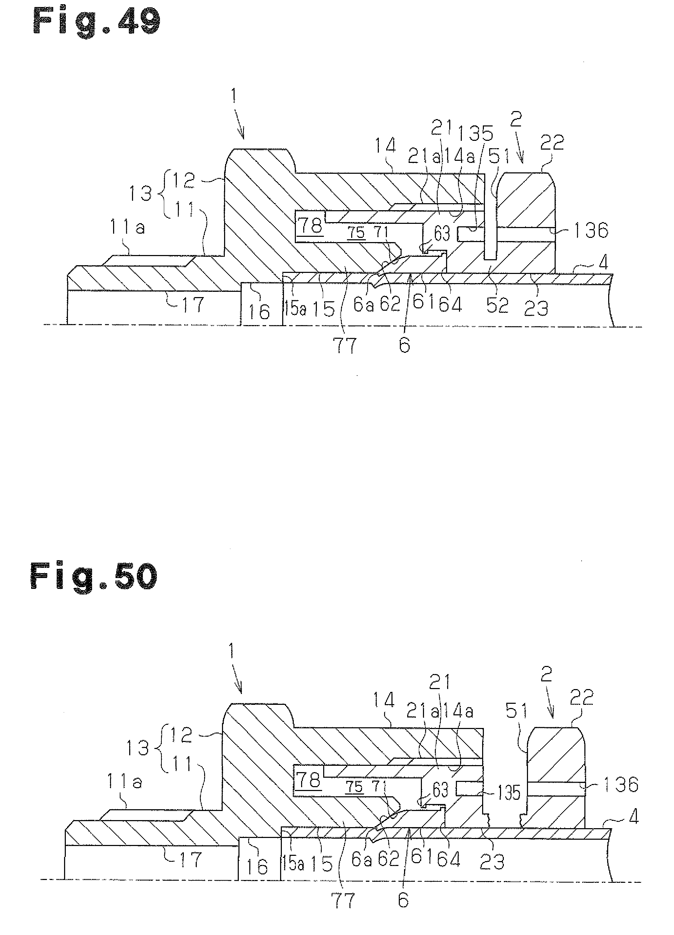

Next, a twentieth embodiment of the present invention will be described with reference to Figs. 49 to 52.

The structures for separating the part of the coupling member 2 which includes at least the holding surfaces from the remaining part of the coupling member 2 which are described in the first to nineteenth embodiments fall into two types. One is to form a slit 51 at the outer circumference of the coupling member 2 so that the entire holding portion 22 can be separated from the remaining part of the coupling member 2, as described in the ninth embodiment, for example. The other is to form a slit 25 at the end surface of the holding portion so that an outer annular part 22a which is a part of the coupling member 2 including the holding surfaces can be separated from the remaining part of the coupling member 2, as described in the first embodiment, for example.

A description has not yet given of a method of loosening the screwed part of the remaining part of the coupling member 2 and a joint body 1 after the part of the coupling member 2 including at least the holding surfaces is separated from the remaining part of the coupling member 2. The method of loosening the screwed part of the remaining part of the coupling member 2 and the joint body 1 by using a special tool will be described with regard to the former type of the above-mentioned two types of the structures for separating the part of the coupling member 2 which includes at least holding surfaces from the remaining part of the coupling member 2. Specifically, following is a description taking the pipe joint according to the ninth embodiment as an example.

In the twentieth embodiment, as illustrated in Figs. 49 to 51, six engaging holes 135 as engaging portions, which are engaged with engaging portions of a special tool 140 discussed below, are formed at the front end of the external thread portion 21. The depth direction of the engaging holes 135 is parallel to the axis of the coupling member 2. The engaging holes 135 are arranged at intervals of the same angle around the axis of the coupling member 2. Each of the engaging holes 135 is positioned on the same axis of one of six lightening holes 136 which are arranged at the holding portion 22. The engaging holes 135 are formed simultaneously when forming the lightening holes 136 at the holding portion 22. In the twentieth embodiment, the circumference wall of the external thread portion 21 is thinner than that in the ninth embodiment.

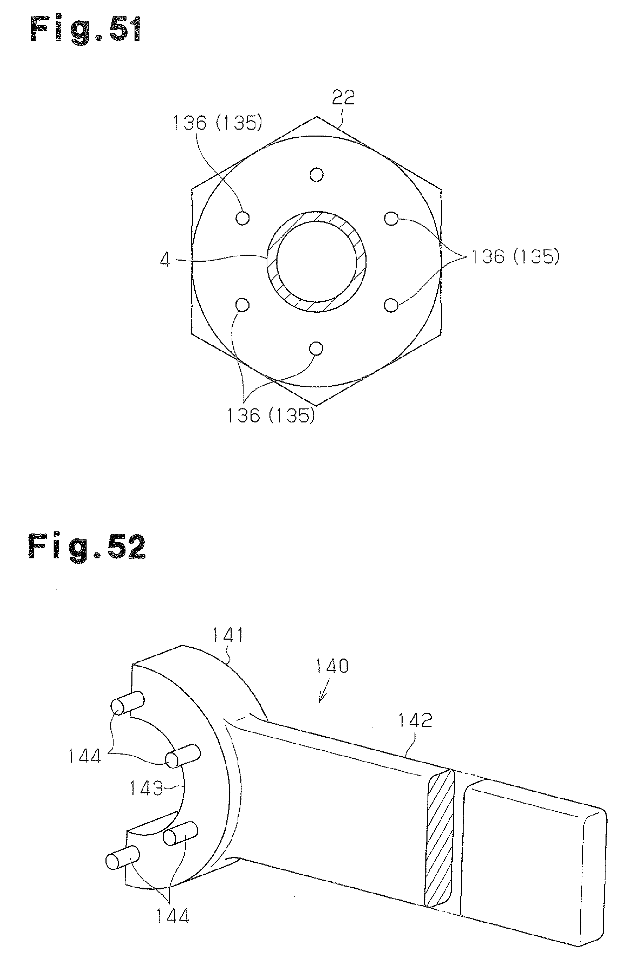

Fig. 52 illustrates as an example the special tool 140 which is used for loosening the screwed part of the joint body 1 and the external thread potion 21 after the holding portion 22 is separated. The special tool 140 includes a semi-cylindrical base body portion 141 and a handle portion 142 which is attached to the base body portion 141. The diameter of an inner semi-cylindrical surface 143 of the base body portion 141 is slightly larger than the outer diameter of the pipe 4. Four engaging projections 144 are formed at a side surface of the base body portion 141 as an engaging portion, which engaged with the engaging portion of the external thread portion 21.

In the case of loosening the screwed part of the joint body 1 and the external thread portion 21 after the holding portion 22 is separated from the external thread portion 21, first, the engaging projections 144 of the special tool 140 are engaged with the engaging holes 135 of the external thread portion 21 after the holding portion 22 is separated. Then, by rotating the handle portion 142 of centered around the base body portion 141, the special tool 140 engaged with the external thread portion 21 is rotated. Accordingly, the screwed part of the external thread portion 21 and the joint body 1 is loosened.

In the pipe joint of the twentieth embodiment, the engaging holes 135 are formed at the external thread portion 21. Accordingly, even after the holding portion 22 is separated from the external thread portion 21, the external thread portion 21 can be unscrewed from the joint body 1, that is, the screwed part of the external thread portion 21 and the joint body 1 can be loosened, by using the special tool 140 which is illustrated in Fig. 52. Therefore, the pipe 4 can be re-connected or replaced even after the pipe 4 is connected to the pipe joint.

Further, since the engaging portions of the external thread portion 21 are not projected but are the engaging holes 135, the external thread portion 21 and the holding portion 22 are easily arranged being close to each other so that the coupling member 2 is downsized.

Further, since the engaging holes 135 of the external thread portion 21 are formed simultaneously when forming the lightening holes 136 at the holding portion 22, the forming of the engaging holes 135 is not disturbed at all by the holding portion 22.

### (Twenty-First Embodiment)

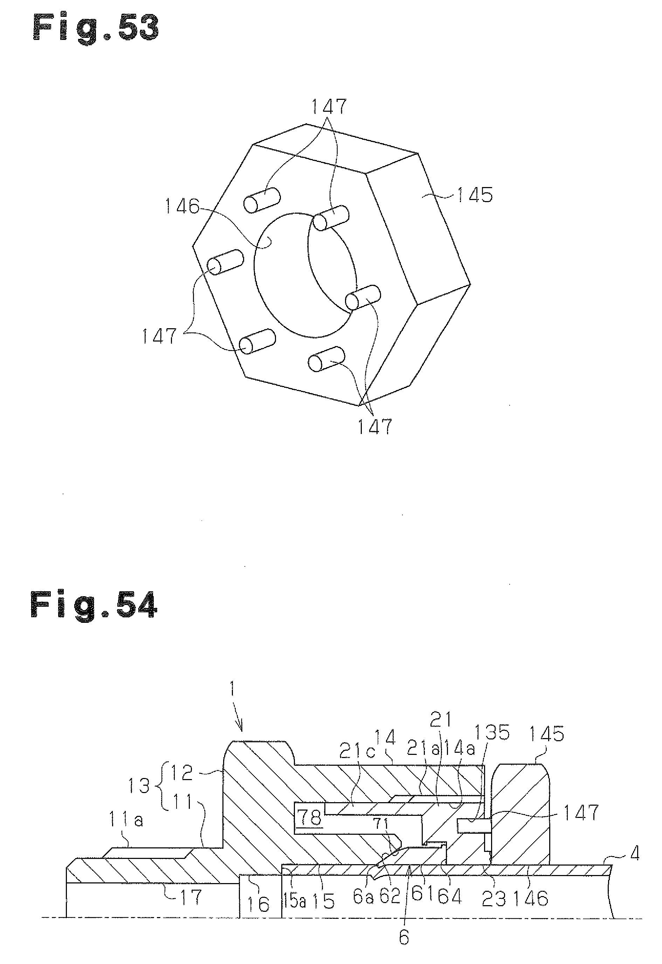

Next, a twenty-first embodiment of the present invention will be described with reference to Figs. 53 and 54. The twenty-first embodiment differs from the twentieth embodiment in that another special tool 145 is used in place of the special tool 140.

As illustrated in Fig. 53, the special tool 145 has an outer shape like a hexagonal nut and a through hole 146 through which the pipe 4 passes is formed at the center part thereof. Six cylindrical engaging projections 147 are formed at a side surface of the special tool 145 as an engaging portion to be engaged with the engaging portion of the external thread portion 21. The engaging projections 147 are arranged at intervals of the same angle around the axis of the special tool 145.

In the case of loosening the screwed part of the joint body 1 and the external thread portion 21 with the special tool 145 after the separation of the holding portion 22, first, the special tool 145 needs to be arranged around a pipe 4, as illustrated in Fig. 54. The pipe 4 is cut at a position near the pipe joint in order to arrange the special tool 145 around the pipe 4. Provided that the pipe 4 is to be replaced, cutting the pipe 4 at the position near the pipe joint does not cause any problem. After cutting the pipe 4 and arranging the special tool 145 around the pipe 4, the engaging projections 147 of the special tool 145 are engaged with the engaging holes 135 of the external thread portion 21 after the holding portion 22 is separated, as illustrated in Fig. 54. Then the special tool 145 which is engaged with the external thread portion 21 is held and rotated by a general-purpose tool such as a spanner. Accordingly, the screwed part of the joint body 1 and the external thread portion 21 is loosened.

As described above, even after the holding portion 22 is separated from the external thread portion 21, the external thread portion 21 can be unscrewed from the joint body 1, that is, the screwed part of the external thread portion 21 and the joint body 1 can be loosened, by using the special tool 145 with a general-purpose tool. Therefore, the pipe 4 which is connected to the pipe joint can be replaced as needed.

### (Twenty-Second Embodiment)

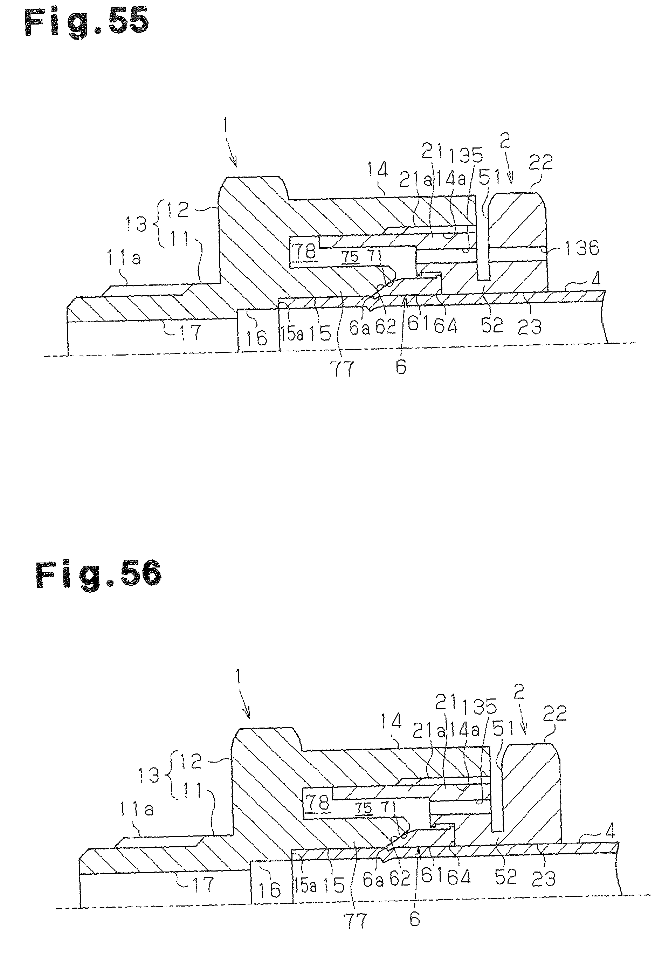

Next, a twenty-second embodiment of the present invention will be described with reference to Figs. 55 and 56. The twenty-second embodiment differs from the twentieth embodiment in that engaging holes 135 of the external thread portion 21 are formed to communicate with the hollow portion 75 formed inside the external thread portion 21.

The coupling member 2 is fastened to the joint body 1, and the hollow portion 75 is thereby merged with hollow portions 76, 78 of the joint body 1. The mutually merged spaces 75, 76, 78 form an inherently non-hermetic space that communicates with the outside through the clearance between the external thread 21a and the internal thread 14a which are mutually screwed. Therefore, even though the engaging holes 135 are formed communicate with the hollow portion 75, there is no adverse effect on sealing performance of the pipe joint.

As in the twentieth embodiment, lightening holes 136 may be formed at the holding portion 22 as illustrated in Fig. 55. Alternatively, the lightening holes 136 of the holding portion 22 may be omitted as illustrated in Fig. 56. In the case of omitting the lightening holes 136, the engaging holes 135 are to be formed from the inside of the external thread portion 21.

When the pipe joint is used for, for example, a refrigeration apparatus, moisture existing in the mutually merged spaces 75, 76, 78 may freeze due to low temperature of the fluid in the pipe 4 in some cases. In such cases, without the engaging holes 135, distortion occurs at parts of the pipe joint created by unnecessary force due to the frozen moisture. Accordingly, there is a possibility that the function of the pipe joint is to be impaired. The engaging holes 135 function as releasing holes, and such problem can be thereby prevented.

### (Twenty-Third Embodiment)

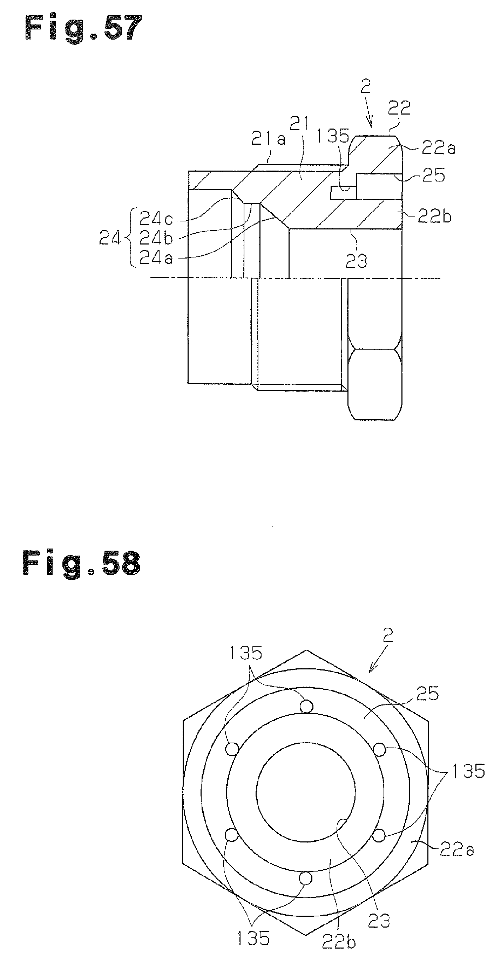

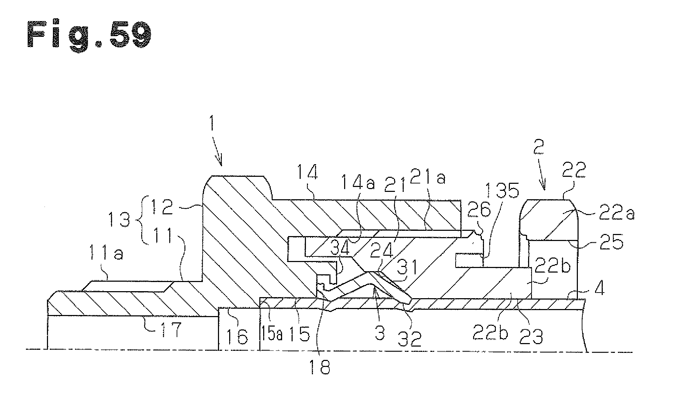

Next, a twenty-third embodiment of the present invention will be described with reference to Figs. 57 to 59. With regard to the latter type of the above-mentioned two types of the structures for separating the part of the coupling member 2 which includes at least holding surfaces from the remaining part of the coupling member 2, a method to loosen the screwed part of the remaining part of the coupling member 2 and the joint body 1 by using a special tool will be described. Specifically, following is a description taking the pipe joint according to the first embodiment as an example.

In the twenty-third embodiment, as illustrated in Figs. 57 and 58, six engaging holes 135 as engaging portions, which are engaged with engaging portions of a special tool discussed below, are formed at a part of the coupling member 2 that is different from the outer annular part 22a of the holding portion 22. The engaging holes 135 are open on the bottom surface of the slit 25 of the coupling member 2. The depth direction of the engaging holes 135 is parallel to the axis of the coupling member 2. The engaging holes 135 are arranged at intervals of the same angle around the axis of the coupling member 2.

The special tool (not shown), which is used for loosening the screwed part of the joint body 1 and the remaining part of the coupling member 2 after the holding portion 22 is separated, is similar to the special tool 140 illustrated in Fig. 52 or the special tool 145 illustrated in Fig. 53. In the twenty-third embodiment, however, the inner annular part 22b of the holding portion 22 is included in the remaining part of the coupling member 2 after the outer annular part 22a of the holding portion 22 is separated. Therefore, in the case where the special tool used for the twenty-third embodiment is similar to the special tool 140 illustrated in Fig. 52, the diameter of the inner semi-cylindrical surface 143 of the base body portion 141 needs to be slightly larger than the outer diameter of the inner annular part 22b. In the case where the special tool used for the twenty-third embodiment is similar to the special tool 145 illustrated in Fig. 53, the diameter of the through hole 146 needs to be slightly larger than the outer diameter of the inner annular part 22b.

In the case of loosening the screwed part of the joint body 1 and the remaining part of the coupling member 2 after the outer annular part 22a of the holding portion 22 separates therefrom, the engaging portions of the special tool similar to the special tool 140 illustrated in Fig. 52 or similar to the special tool 145 illustrated in Fig. 53 are engaged with the engaging holes 135 of the remaining part of the coupling member 2 after the outer annular part 22a separates therefrom. Then, the special tool engaged with the remaining part of the coupling member 2 is rotated. The screwed part of the joint body 1 and the remaining part of the coupling member 2 is thereby loosened.

In the pipe joint of the twenty-third embodiment, the engaging holes 135 are formed at a different part of the coupling member 2 from the outer annular part 22a of the holding portion 22. Accordingly, even after the outer annular part 22a is separated from the remaining part of the coupling member 2, the remaining part of the coupling member 2 can be unscrewed from the joint body 1, that is, the screwed part of the joint body 1 and the remaining part of the coupling member 2 can be loosened, by using the special tool similar to the special tool 140 illustrated in Fig. 52 or the special tool 145 illustrated in Fig. 53. Therefore, the pipe 4 can be re-connected or replaced even after the pipe 4 is connected to the pipe joint.

### (Twenty-Fourth Embodiment)

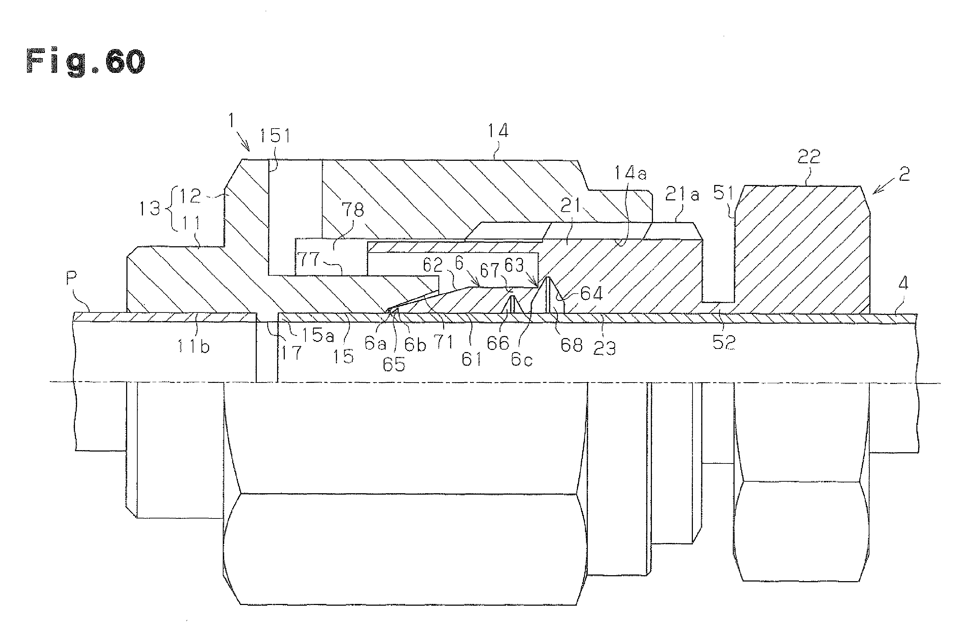

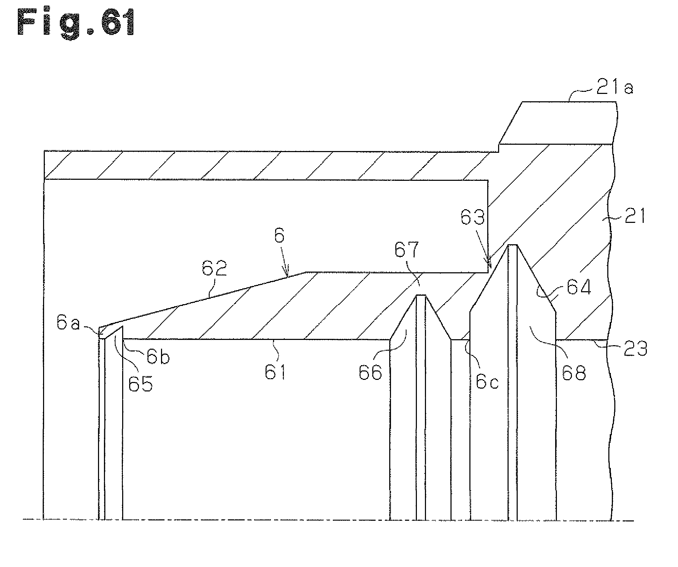

Next, a twenty-fourth embodiment of the present invention will be described with reference to Figs. 60 to 64. The twenty-fourth embodiment is a modification of the ninth embodiment and differs from the ninth embodiment in the following respects.

First, with regard to the pipe body 1, the attaching portion 11 which is attached to the interconnecting device has a pipe connecting port 11b into which a pipe P is inserted, as illustrated in Fig. 60. The pipe P inserted into the pipe connecting port 11b is fixed to the attaching portion 11 by brazing. The outer circumferential surface of the internal thread cylinder portion 14 is a hexagonal column surface that is connected to and flush with the outer circumferential surface of the nut portion 12. A releasing hole 151 which connects the hollow portion 78 inside the internal thread cylinder portion 14 to the outside is formed at the boundary between the nut portion 12 and the internal thread cylinder portion 14. The releasing hole 151 prevents the problem caused when air moisture in the hollow portion 78 freezes.

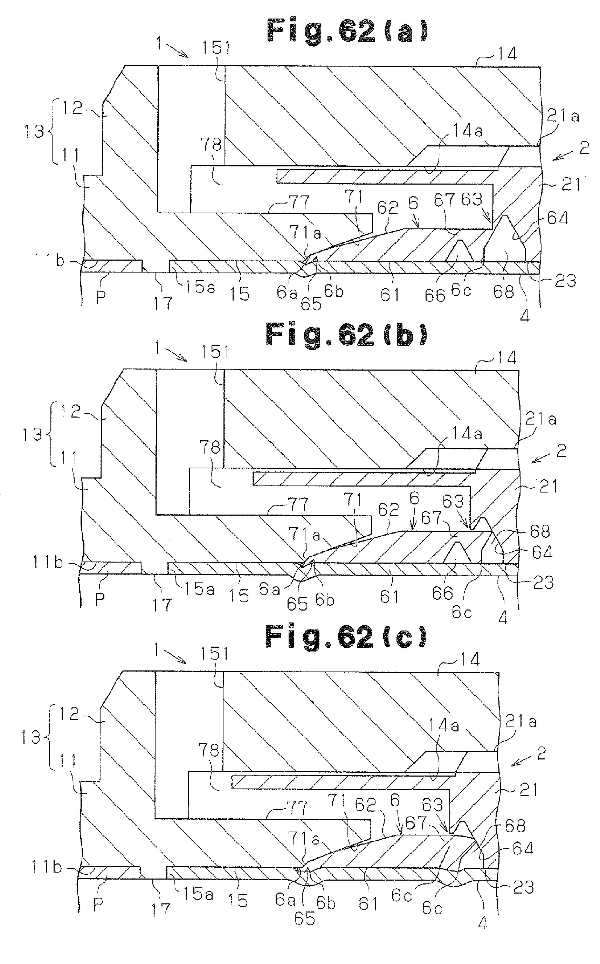

Next, regarding the coupling member 2, the thickness of the circumference wall of the external thread portion 21 is thinner than that in the ninth embodiment. On the other hand, the thickness of the bottom wall of the external thread portion 21 and the length of the holding portion 22 in the axial direction are slightly thicker and longer than the thickness and length in the ninth embodiment. As seen from Figs. 62(a) to 62(c), the angle of a rear part 71a of the cam surface 71 in relation to the center axis of the joint body 1 is larger than the angle of the rest of the cam surface 71.

Next, regarding the substantially cylindrical ferrule 6, a first notch 65 having a right triangular cross section is formed at the inner circumference of the distal part 6a of the ferrule 6 in order to facilitate deformation of the distal part 6a. Accordingly, a distal edge 6b defined by a surface of the first notch 65 which is perpendicular to the center axis of the ferrule 6 and the inner circumferential surface of the center hole 61 is formed at the distal part 6a of the ferrule 6. On the other hand, a second notch 66 having a trapezoidal cross section is formed at the inner circumference of the proximal part of the ferrule 6. Accordingly, a thin-walled portion 67 is formed at the proximal part of the ferrule 6. The ferrule 6 is easy to be deformed hinged at the thin-walled portion 67. Further, a notch 68 is also formed at the inner circumference at the boundary between the ferrule 6 and the external thread portion 21. Consequently, in addition to the thin-walled portion 63 which connects the ferrule 6 to the external thread portion 21 and the pressing surface 64 which presses the proximal end of the ferrule 6, a proximal edge 6c defined by the proximal surface of the ferrule 6 and the inner circumference of the center hole 61 is formed at the boundary between the ferrule 6 and the external thread portion 21. Unlike the ninth embodiment, the pressing surface 64 is a tapered surface of which the diameter increases toward the ferrule 6.

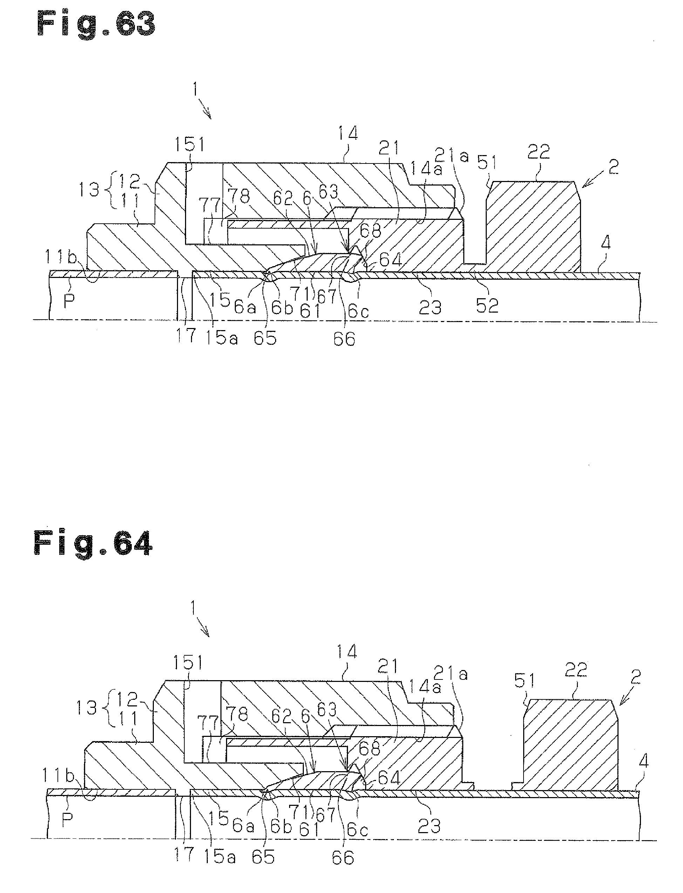

Fig. 60 illustrates a state where the distal part 6a of the ferrule 6 contacts the cam surface 71 by fastening the coupling member 2 by hand in fastening the coupling member 2 to the joint body 1. When the coupling member 2 is further fastened by hand from this state, the distal part 6a of the ferrule 6 is pressed in between the pipe 4 and the inner circumferential surface of the pipe connecting port 15, as illustrated in Fig. 62(a). Accordingly, since the pipe 4 is temporally held, the pipe 4 need not be held separately thereafter. Fastening the coupling member 2 thereafter requires large rotation torque. Therefore, when the coupling member 2 is further fastened from the state illustrated in Fig. 62(a), the thin-walled portion 63 connecting the ferrule 6 to the external thread portion 21 is broken and the ferrule 6 is separated from the coupling member 2, as illustrated in Fig. 62(b). Then, the coupling member 2 continues to be fastened, the proximal end of the ferrule 6 which has separated from the coupling member 2 is thereby pressed by the pressing surface 64 and deformation of the ferrule 6 occurs centered around the thin-walled portion 67 due to the second notch 66. As a result, as illustrated in Figs. 62(c) and 63, the distal edge 6b and the proximal edge 6c bite into the pipe 4. When the biting of the ferrule 6 into the pipe 4 progresses to a some extent, rotation torque required for coupling the coupling member 2 reaches a predetermined value so that the fastening of the coupling member 2 is completed. When the rotation torque reaches the predetermined value, the connecting portion 52 which connects the holding portion 22 to the external thread portion 21 is broken and the holding portion 22 is separated from the external thread portion 21, as illustrated in Fig. 64. In this manner, it becomes impossible to loosen the screwed part of the joint body 1 and the coupling member 2 by handling the coupling member 2 after the holding portion 22 is separated from the external thread portion 21 by using a general fastening tool.

With regard to the pipe joint according to the twenty-fourth embodiment, the distal edge 6b and the proximal edge 6c are caused to bite into the pipe 4 by the deformation of the ferrule 6 centered around the thin-walled portion 67 due to the second notch 66. Therefore, sealing performance is improved by the biting of the distal edge 6b and the holding force of the pipe 4 is increased by the biting of the proximal edge 6c. Further, as in the ninth embodiment, it becomes impossible to loosen the screwed part of the joint body 1 and the coupling member 2 and to further remove the pipe 4 after the connecting of the pipe 4 is completed.

### (Modifications)

In each of the above-mentioned embodiments, the part of the coupling member 2 including at least the holding surfaces and the remaining part of the coupling member 2 which are mutually separated when rotation torque required for fastening the coupling member to the joint body 1 reaches a predetermined value are integrally formed. However, it is also possible to first separately form the part of the coupling member 2 including at least the holding surfaces and the remaining part of the coupling member 2 and then to connect the separately formed parts by adhesion, engagement and the like with a connecting portion.

Breakage of the connecting portion for separating the part of the coupling member 2 including at least the holding surfaces from the remaining part of the coupling member 2 does not necessarily need to be caused by the rotation torque for fastening the coupling member 2 with the joint body 1. For example, it is also possible to complete the coupling of the coupling member 2 with the joint body 1 when predetermined pipe sealing performance and pipe holding force are achieved, and then to break the connecting portion by applying force thereafter in the axial direction of the coupling member 2 on the part of the coupling member 2 including at least the holding surfaces. In this case, a determination of when the predetermined pipe sealing performance and pipe holding force are achieved can be made by the rotating angle of the coupling member 2 or the position of the coupling member 2. Methods for applying force in the axial direction of the coupling member 2 on the part of the coupling member including at least holding surfaces include, for example, hitting the part of the coupling member 2 at least including the holding surfaces with a fastening tool and repetitively pulling and bending the part of the coupling member 2 including at least the holding surfaces with a tool such as pliers.

In the second to fourth embodiments, the ferrule 3 is connected to the base portion 13 with the thin-walled portion 34 and is separated from the joint body 1 by the breakage of the thin-walled portion 34 in the process of fastening the coupling member 2 to the joint body 1. However, the ferrule 3 in these embodiments may be directly connected to the base portion 13 as the ferrule 3 in the fifth embodiment. In this case, the ferrule 3 remains connected to the base portion 13 in the process of fastening the coupling member 2 to the joint body 1.

In the sixth to ninth and eleventh embodiments, the ferrule 6 is connected to the external thread portion 21 with the thin-walled portion 63 and is separated from the external thread portion 21 by the breakage of the thin-walled portion 63 in the process of fastening the coupling member 2 to the joint body 1. However, the ferrule 6 in these embodiments may be directly connected to the external thread portion 21 like the ferrule 6 in the twelfth embodiment. In this case, the ferrule 6 remains connected to the external thread portion 21 in the process of fastening the coupling member 2 to the joint body 1.

In the sixteenth embodiment, a two-part split type ferrule, which includes the front ferrule 110 and the back ferrule 120 and is separated from both of the joint body 1 and the coupling member 2, is used. However, a conventionally known single ferrule which is separated from both of the joint body 1 and the coupling member 2 may be used in place of the front ferrule 110 and the back ferrule 120.

The ferrule in the first to fourth, sixth to ninth, and eleventh embodiments may be changed to a two-part split type ferrule or a single ferrule which is separated from both of the joint body 1 and the coupling member 2.

In the second, seventh, ninth, twentieth, twenty-first, and twenty-second embodiments, the surface close to the joint body 1 among the surfaces which define the slit 51 is positioned to be substantially aligned with the end surface of the internal thread cylinder portion 14 when the coupling member 2 has been fastened to the joint body 1. However, the surface close to the joint body 1 among the surfaces which define the slit 51 may be positioned inside the internal thread cylinder portion 14 or may be positioned slightly outside the internal thread cylinder portion 14.

In the fourth, eleventh, seventeenth, and nineteenth embodiments, the surface close to the joint body 1 among the surfaces which define the slit 51 is positioned to be substantially aligned with the end surface of the protecting cover 35 or the outer circumference cover 85 when the coupling member 2 has been fastened to the joint body 1. However, the surface close to the joint body 1 among the surfaces which define the slit 51 may be positioned inside the protecting cover 35 or the outer circumference cover 85 or may be positioned slightly outside the protecting cover 35 or the outer circumference cover 85.

In the first to twenty-third embodiments, the attaching portion 11 of the joint body 1 is attached to the interconnecting device by screwing as can be seen from the condition that the external thread 11a is formed on the outer circumferential surface thereof. However, like the twenty-fourth embodiment, it is also possible to be connected to the pipe of an interconnecting device by brazing or to be connected to an interconnecting device such as a closing valve by brazing.

In the second to fourth, seventh, tenth, eleventh, sixteenth to nineteenth, and twenty-fourth embodiments, engaging holes 135 and lightening holes 136 may be formed at the pipe joint as in the twentieth embodiment. In this case, the screwed part of the joint body 1 and the coupling member 2 after the part of the coupling member 2 including at least the holding surfaces is separated from the remaining part of the coupling member 2 can be loosened by using a special tool as described in the twentieth and the twenty-first embodiments. Further, in these embodiments, the pipe joint may include engaging holes 135 which are through holes as in the twenty-second embodiment.

In the fifth, sixth, and eighth embodiments, engaging holes 135 may be formed at the pipe joint as in the twenty-third embodiment. In this case, the screwed part of the joint body 1 and the coupling member 2 after the part of the coupling member 2 including at least the holding surfaces is separated from the remaining part of the coupling member 2 may be loosened by using a special tool.

## Claims

1. A pipe joint comprising:
a joint body which is attached to an interconnecting device and into which a pipe is to be inserted; and
a coupling member which is arranged around the pipe which is inserted into the joint body,
wherein the joint body and the coupling member each include a screw portion, and the coupling member is fastened to the joint body by mutually screwing the screw portions,
wherein the coupling member includes a holding portion, and a pair of or a plurality of pairs of holding surfaces which are opposite to each other are formed on the outer circumferential surface of the holding portion so that the holding portion can be held with a fastening tool, and
wherein a first part which is a part of the coupling member including at least the holding surfaces is configured to be disconnectable from a second part which is the remaining part of the coupling member.

2. The pipe joint according to claim 1,
wherein when rotation torque which is required for fastening the coupling member to the joint body reaches a predetermined value, the first part of the coupling member is disconnected from the second part of the coupling member by the rotation torque.

3. The pipe joint according to claim 1 or 2,
wherein a pipe connecting element of the coupling member is configured to be located inside the joint body and the holding portion is configured to be located outside the joint body when the coupling member is fastened to the joint body, and
wherein the first part of the coupling member is the holding portion located outside the joint body.

4. The pipe joint according to claim 1 or 2,
wherein the holding portion includes an outer annular part having the holding surfaces and an inner annular part located inside the outer annular part, the first part of the coupling member being the outer annular part of the holding portion,
wherein, when the coupling member is fastened to the joint body, a pipe connecting element of the coupling member is configured to be located inside the joint body and the holding portion is configured to be located outside the joint body, and
wherein the outer annular part of the holding portion is configured to remain existing around the inner annular part after being disconnected from the second part of the coupling member in order to prevent a fastening tool from being used against the inner annular part.

5. The pipe joint according to claim 1 or 2,
wherein the holding portion includes a slit formed so that the holding portion is partitioned into an outer annular part having the holding surfaces and an inner annular part located inside the outer annular part, and the first part of the coupling member is true outer annular part of the holding portion, the outer annular part being connected to the second part of the coupling member with a thin-walled connecting portion, and
wherein the outer annular part is separated and disconnected from the second part of the coupling member by breakage of the connecting portion.

6. The pipe joint according to any one of claims 1 to 3,
wherein the coupling member includes a slit of which the depth direction matches a radial direction of the coupling member, so as to partition the coupling member into the holding portion serving as the first part and the remaining part of the coupling member serving as the second part, the holding portion being connected to the remaining part of the coupling member with a thin-walled connecting portion, and
wherein the holding portion is separated and disconnected from the second part of the coupling member by breakage of the connecting portion.

7. The pipe joint according to claim 6,
wherein the slit is positioned to substantially match an end surface of the joint body that is closer to the coupling member.

8. The pipe joint according to claim 1 or 2,
wherein the joint body includes an external thread portion which has an external thread as the screw portion on the outer circumferential surface thereof,
wherein the coupling member includes an internal thread cylinder portion which has an internal thread as the screw portion on the inner circumferential surface thereof, the outer circumferential surface of the internal thread cylinder portion being a cylindrical surface,
wherein the holding portion is connected to the internal thread cylinder portion with a thin-walled connecting portion, and
wherein the first part of the coupling member is the holding portion which is separated and disconnected from the second part of the coupling member by breakage of the connecting portion.

9. The pipe joint according to any one of claims 1 to 8,
wherein the joint body includes: a base portion having a nut portion and an attaching portion which is attached to the interconnecting device; an internal thread cylinder portion having an internal thread on the inner circumferential surface thereof as the screw portion which is screwed to the screw portion of the coupling member; and a ferrule connected to the base portion, the nut portion being configured to be held by a fastening tool when the coupling member is fastened to the joint body,
wherein the coupling member includes, in addition to the holding portion, an external thread portion having an external thread on the outer circumferential surface thereof as the screw portion which is screwed to the screw portion of the joint body, and a cam surface formed at the external thread portion, and
wherein an end part of the ferrule is configured to bite into a surface of the pipe by being guided by the cam surface when the coupling member is fastened to the joint body.

10. The pipe joint according to any one of claims 1 to 8,
wherein the joint body includes: a base portion having a nut portion and an attaching portion which is attached to the interconnecting device; an external thread portion having an external thread on the outer circumferential surface thereof as the screw portion which is screwed to the screw portion of the coupling member; and a ferrule connected to the external thread portion, the nut portion being configured to be held by a fastening tool when the coupling member is fastened to the joint body,
wherein the coupling member includes, in addition to the holding portion, an internal thread cylinder portion having an internal thread on the inner circumferential surface thereof as the screw portion which is screwed to the screw portion of the joint body, and a cam surface formed at the internal thread cylinder portion, and
wherein an end part of the ferrule is configured to bite into a surface of the pipe by being guided by the cam surface when the coupling member is fastened to the joint body.

11. The pipe joint according to any one of claims 1 to 8,
wherein the joint body includes: a base portion having a nut portion and an attaching portion which is attached to the interconnecting device; an internal thread cylinder portion having an internal thread on the inner circumferential surface thereof as the screw portion which is screwed to the screw portion of the coupling member; and a cam surface formed at the internal thread cylinder portion, the nut portion being configured to be held by a fastening tool when the coupling member is fastened to the joint body,
wherein the coupling member includes, in addition to the holding portion, an external thread portion having an external thread on the outer circumferential surface thereof as the screw portion which is screwed to the screw portion of the joint body, and a ferrule connected to the external thread portion, and
wherein an end part of the ferrule is configured to bite into a surface of the pipe by being guided by the cam surface when the coupling member is fastened to the joint body.

12. The pipe joint according to any one of claims 1 to 8,
wherein the joint body includes: a base portion having a nut portion and an attaching portion which is attached to the interconnecting device; an external thread portion having an external thread on the outer circumferential surface thereof as the screw portion which is screwed to the screw portion of the coupling member; and a cam surface formed at the external thread portion, the nut portion being configured to be held by a fastening tool when the coupling member is fastened to the joint body,
wherein the coupling member includes, in addition to the holding portion, an internal thread cylinder portion having an internal thread on the inner circumferential surface thereof as the screw portion which is screwed to the screw portion of the joint body, and a ferrule connected to the internal thread cylinder portion, and
wherein an end part of the ferrule is configured to bite into a surface of the pipe by being guided by the cam surface when the coupling member is fastened to the joint body.

13. The pipe joint according to any one of claims 1 to 8,
wherein the joint body includes: a base portion having a nut portion and an attaching portion which is attached to the interconnecting device; an external thread portion having an external thread on the outer circumferential surface thereof as the screw portion which is screwed to the screw portion of the coupling member; and a cam surface formed at the external thread portion, the nut portion being configured to be held by a fastening tool when the coupling member is fastened to the joint body,
wherein the coupling member includes, in addition to the holding portion, an internal thread cylinder portion having an internal thread on the inner circumferential surface thereof as the screw portion which is screwed to the screw portion of the joint body,
wherein the pipe joint further comprises a ferrule formed separately from the joint body and the coupling member, the ferrule being located between the joint body and the coupling member, and
wherein, when the coupling member is fastened to the joint body, the ferrule is pressed by the internal thread cylinder portion of the coupling member and an end part of the ferrule is bite into a surface of the pipe by being guided by the cam surface.

14. The pipe joint according to any one of claims 1 to 8,
wherein the joint body includes: a base portion having a nut portion and an attaching portion which is attached to the interconnecting device; an external thread portion having an external thread on the outer circumferential surface thereof as the screw portion which is screwed to the screw portion of the coupling member; and a flare receiving surface formed at the external thread portion,
wherein the coupling member includes, in addition to the holding portion, an internal thread cylinder portion having an internal thread on the inner circumferential surface thereof as the screw portion which is screwed to the screw portion of the joint body, and a flare pressing surface formed at the internal thread cylinder portion, and
wherein a flare portion which is formed at a distal end of the pipe is pinched between the flare deceiving surface and the flare pressing surface when the coupling member is fastened to the joint body.

15. The pipe joint according to claim 9 or 11,
wherein a pipe connecting element of the coupling member is configured to be located inside the internal thread cylinder portion when the coupling member is fastened to the joint body.

16. The pipe joint according to claim 10,
wherein the joint body further includes a cylindrical protecting cover which surrounds the ferrule.

17. The pipe joint according to claim 16,
wherein the internal thread cylinder portion and a pipe connecting element of the coupling member are configured to be located inside the protecting cover when the coupling member is fastened to the joint body.

18. The pipe joint according to any one of claims 12 to 14,
wherein the joint body further includes a cylindrical outer circumference cover capable of covering the internal thread cylinder portion of the coupling member when the coupling member is fastened to the joint body, and
wherein the pipe connecting element of the coupling member is configured to be located inside the outer circumference cover when the coupling member is fastened to the joint body.

19. The pipe joint according to claim 9,
wherein the ferrule remains connected to the base portion of the joint body even after the coupling member has been fastened to the joint body.

20. The pipe joint according to claim 9,
wherein the ferrule is separated from the base portion of the joint body in a process of fastening the coupling member to the joint body.

21. The pipe joint according to claim 19 or 20,
wherein both of the outer circumferential surface and the inner circumferential surface of the ferrule are substantially shaped like inverted V in a cross-section along a plane including a center axis of the joint body, and
wherein the ferrule is configured such that both of a distal end and a proximal end thereof bite into the surface of the pipe.

22. The pipe joint according to claim 10,
wherein the ferrule remains connected to the external thread portion of the joint body even after the coupling member has been fastened to the joint body.

23. The pipe joint according to claim 10,
wherein the ferrule is separated from the external thread portion of the joint body in a process of fastening the coupling member to the joint body.

24. The pipe joint according to claim 22 or 23,
wherein both of the outer circumferential surface and the inner circumferential surface of the ferrule are substantially shaped like inverted V in a cross-section along a plane including a center axis of the joint body, and
wherein the ferrule is configured such that both of a distal end and a proximal end thereof bite into the surface of the pipe.

25. The pipe joint according to claim 11,
wherein the ferrule remains connected to the external thread portion of the coupling member even after the coupling member has been fastened to the joint body.

26. The pipe joint according to claim 11,
wherein the ferrule is separated from the external thread portion of the coupling member in a process of fastening the coupling member to the joint body.

27. The pipe joint according to claim 12,
wherein the ferrule remains connected to the internal thread cylinder portion of the coupling member even after the coupling member has been fastened to the joint body.

28. The pipe joint according to claim 12,
wherein the ferrule is separated from the internal thread cylinder portion of the coupling member in a process of fastening the coupling member to the joint body.

29. The pipe joint according to any one of claims 1 to 28,
wherein the second part of the coupling member includes an engaging portion formed to engage a special tool with the second part after the first part is disconnected, and
wherein, after the first part is disconnected, the second part of the coupling member can be unscrewed from the joint body by engaging the special tool with the engaging portion.

30. The pipe joint according to claim 29,
wherein the engaging portion is an engaging hole with which an engaging projection formed at the special tool is engaged.

31. The pipe joint according to claim 6 or 7,
wherein the second part of the coupling member includes an engaging hole formed to engage an engaging projection of a special tool with the second part after the first part is disconnected,
wherein, after the first part is disconnected, the second part of the coupling member can be unscrewed from the joint body by engaging the engaging projection of the special tool in the engaging hole, and
wherein the holding portion includes a lightening hole formed therein, through which the engaging hole of the second part is formed.

32. The pipe joint according to claim 30 or 31,
wherein the engaging hole is formed by penetrating the second part of the coupling member.

33. The pipe joint according to claim 7,
wherein the joint body includes an internal thread cylinder portion having an internal thread on the inner circumferential surface thereof as the screw portion which is screwed to the screw portion of the coupling member, and a cam surface formed at the internal thread cylinder portion,
wherein the second part of the coupling member includes an external thread portion having an external thread on the outer circumferential surface thereof as the screw portion which is screwed to the screw portion of the joint body, and a substantially cylindrical ferrule connected to the external thread portion with a thin-walled portion, the external thread portion having a cylindrical circumference wall which extends to surround the ferrule,
wherein a first notch is formed on the inner circumferential surface of the distal part of the ferrule, and thereby a distal edge defined by a part of surface which defines the first notch and the inner circumferential surface of the ferrule is formed at the distal part of the ferrule,
wherein a second notch is formed on the inner circumferential surface of the proximal part of the ferrule, and thereby a thin-walled portion is formed at the proximal part of the ferrule,
wherein the ferrule includes a proximal edge which is defined by the proximal surface of the ferrule and the inner circumferential surface of the ferrule,
wherein the distal end of the ferrule is configured to be pressed in between the pipe and the joint body by initial hand-fastening for fastening the coupling member to the joint body, and
wherein the distal edge and the proximal edge are configured to bite into the pipe by deformation of the ferrule centered around the thin-walled portion which is formed by the second notch.

34. A refrigeration apparatus which uses the pipe joint according to any one of claims 1 to 33 for a refrigerant circuit.

35. A heat pump water heating apparatus which uses the pipe joint according to any one of claims 1 to 34 for a refrigerant circuit.
